# EUROPEAN PATENT APPLICATION

(11) **EP 4 848 872 A1**
(43) Date of publication of application: **02.12.2026**
(21) Application number: 24926777.4
(22) Date of filing: 22.10.2024
(51) Int. Cl.: H04W 74/0833

(54) **COMMUNICATION METHOD AND DEVICE**

(30) Priority: 28.02.2024 CN 202410228375
(71) Applicant: Huawei Technologies Co., Ltd., Shenzhen, Guangdong 518129 (CN)
(72) Inventor: ZHANG, Mengchen, Shenzhen, Guangdong 518129 (CN); SHI, Yulong, Shenzhen, Guangdong 518129 (CN); KUANG, Yiru, Shenzhen, Guangdong 518129 (CN); WANG, Rui, Shenzhen, Guangdong 518129 (CN)
(74) Representative: Goddar, Heinz J.
(86) International application number: PCT/CN2024/126466
(87) International publication number: WO 2025/179915

(57) **Abstract**

This application relates to a communication method and apparatus. A first apparatus obtains first indication information. The first indication information indicates one or more of the following: a first duration, where the first duration indicates a latest time for sending first random information on an access occasion; a first step size, where the first step size is a time interval between two access moments in the first duration; or a first quantity, where the first quantity indicates a quantity of access moments in the first duration. The first apparatus sends the first random information at a first access moment, where the first access moment is a moment after a first moment, the first moment is a moment related to a value of a first counter becoming 0, and the first access moment is determined based on the first indication information. When the first moment arrives, the first apparatus waits for a period of time before performing transmission, where the waiting time is determined based on the first indication information. Therefore, a probability of collision between apparatuses is reduced on an access occasion, thereby improving transmission quality.

## Description

### CROSS-REFERENCE TO RELATED APPLICATIONS

This application claims priority to Chinese Patent Application No. 202410228375.7, filed with the China National Intellectual Property Administration on February 28, 2024 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Currently, the internet of things (internet of things, IoT) has attracted considerable attention. In IoT scenarios, a quantity of devices that can be accommodated is expected to increase by reducing device size, lowering device complexity, and the like. IoT devices may include various types, such as battery-powered IoT devices, battery-free IoT devices, or IoT devices with limited energy storage. IoT devices with limited energy storage do not require manual battery replacement or charging. Battery-free IoT devices or IoT devices with limited energy storage may also be referred to as ambient internet of things (ambient IoT, AIoT) devices. AIoT devices can collect energy from the environment for service and communication.

However, how IoT devices access a network or communicate with the network has not been discussed at present.

### SUMMARY

Embodiments of this application provide a communication method and apparatus, to provide a manner for an IoT device to access a network, so that the IoT device can communicate with the network.

According to a first aspect, a first communication method is provided. The method is applied to a first apparatus side, that is, the method may be performed by a first apparatus. The first apparatus is, for example, an independent device, or a chip system or a functional module included in another device. The chip system or the functional module can implement a function of the first apparatus. The another device is, for example, a network device or a terminal device. The network device includes, for example, a reader or an interrogator, or may include an access network device and/or a core network device. The terminal device includes, for example, a tag. The access network device is, for example, a base station. Optionally, the first apparatus is, for example, an AIoT apparatus. The method includes: obtaining first indication information, where the first indication information indicates one or more of the following: a first duration, where the first duration indicates a latest time for sending random information on an access occasion; a first step size, where the first step size is a time interval between two access moments in the first duration; or a first quantity, where the first quantity indicates a quantity of access moments in the first duration; and sending first random information at a first access moment, where the first access moment is a moment after a first moment, the first moment is a moment related to a value of a first counter becoming 0, the first access moment is determined based on the first indication information, and the first counter is configured to determine a sending time of the first random information.

In this embodiment of this application, the first apparatus may obtain the first indication information, and may determine the first access moment based on the first indication information, so that the first apparatus may send the first random information at the first access moment, and by using the first random information, the first apparatus can communicate with a network. It can be learned that this embodiment of this application provides a manner for the first apparatus to access the network, so that the first apparatus can communicate with the network. In addition, when accessing the network, the first apparatus sends the first random information at the first access moment after the first moment, instead of at the first moment. This is equivalent to that the first apparatus waits for a period of time when the first moment arrives, and then performs the transmission at the first access moment. The waiting time period is determined based on the first indication information. For example, waiting times determined by different apparatuses based on the first indication information are different. In this case, even if two apparatuses have a same first moment on an access occasion, because waiting times of the two apparatuses are different, sending moments of the two apparatuses on the access occasion may be separated, thereby reducing a probability of collision between the apparatuses on the access occasion, and improving transmission quality.

In an optional implementation, that the first access moment is determined based on the first indication information includes: the first indication information is used to determine one or more moments, and the first access moment is one of the one or more moments; or the first indication information is used to determine one or more durations, the one or more durations include a second duration, and the first access moment is a moment at which the second duration expires after the first moment. The first apparatus may directly determine the first access moment based on the first indication information, or may determine a duration, and then determine the first access moment based on the duration. The manners are flexible.

In an optional implementation, that the first access moment is determined based on the first indication information includes: the first indication information is used to determine one or more values, the one or more values include a first value, and the first access moment is determined based on the first value. The first apparatus may determine a corresponding value based on the first indication information, and then determine the first access moment based on the value. It can be learned that in this embodiment of this application, there are a plurality of manners of determining the first access moment based on the first indication information, and different manners may be used based on different scenarios, networks, or the like.

In an optional implementation, the first value is a value to which the first counter is updated when the value of the first counter is 0, and the first access moment is equal to or later than a moment at which a value of the updated first counter becomes 0; or the first value is a value of a second counter, and the first access moment is equal to or later than a moment at which the value of the second counter becomes 0. In this embodiment of this application, when the value of the first counter becomes 0 for the first time (that is, the value of the to-be-updated first counter becomes 0), the first apparatus may not send the random information based on this, but assign the first value to the first counter (which may be understood as updating the first counter) and wait until the value of the updated first counter becomes 0 again, or wait until the value of the second counter becomes 0. An initial value of the second counter is determined based on the first value, for example, is the first value. Alternatively, the initial value may be a sum of the first value and an initial value of the first counter. This is not limited. Until the value of the second counter becomes 0 or the value of the updated first counter becomes 0, the first apparatus sends the random information. The waiting time period is determined based on the first indication information. For example, waiting times determined by different apparatuses based on the first indication information are different. In this case, even if two apparatuses have a same first moment on an access occasion (or a time unit), because waiting times of the two apparatuses are different, sending moments of the two apparatuses on the access occasion may be separated, thereby reducing a probability of collision between the apparatuses on the access occasion, and improving transmission quality.

In an optional implementation, if the first value is 0, the first access moment is equal to or later than the moment at which the value of the first counter or the second counter becomes the first value. If the first value is 0, a moment at which the first value is assigned to the first counter or the moment at which the value of the second counter becomes the first value may be the first access moment without waiting. Alternatively, the first access moment may be later than the moment. This is not limited.

In an optional implementation, the method further includes: if the first value is not 0, receiving a first message; decrementing the value of the first counter or the second counter by 1 based on the first message; and until the value of the first counter or the second counter becomes 0, determining that the first access moment is equal to or later than the moment at which the value of the first counter or the second counter becomes 0. It may be understood that, in this embodiment of this application, the first apparatus may decrement the counter or implement timing based on a message from a second apparatus. Therefore, even if a capability of the first apparatus is weak (for example, some apparatuses may not be able to implement a timing function), the first apparatus can still perform the technical solutions in this embodiment of this application, thereby expanding an application scope of this embodiment of this application.

In an optional implementation, the method further includes: receiving first information, where the first information is used to determine an initial value of the first counter, and the initial value is greater than or equal to 0. To maintain the first counter, the first apparatus needs to determine the initial value of the first counter. The initial value of the first counter may be determined based on the first information. For example, initial values determined by different apparatuses based on the first information may be different, so that collisions of sending random information by the apparatuses can be reduced to some extent.

In an optional implementation, the method further includes: if the initial value is greater than 0, receiving a second message; and decrementing the value of the first counter based on the second message, until the value of the first counter becomes 0. In this embodiment of this application, the first apparatus may decrement the counter or implement timing based on a message from a second apparatus. Therefore, even if a capability of the first apparatus is weak (for example, some apparatuses may not be able to implement a timing function), the first apparatus can still perform the technical solutions in this embodiment of this application, thereby expanding an application scope of this embodiment of this application.

In an optional implementation, the first moment is the moment at which the value of the first counter becomes 0; or the first moment is a moment at which a third message is received, and the third message is used to determine that the value of the first counter is 0. The first moment is the moment related to the value of the first counter becoming 0, for example, is the moment at which the value of the first counter becomes 0 (which may be understood as a moment at which the first apparatus updates, sets, or decrements the value of the first counter to 0). Alternatively, the first moment may be the moment at which the third message that causes the value of the first counter to become 0 is received (it may be understood that, at the moment, the first apparatus has not updated, set, or decremented the value of the first counter to 0, but after the moment, the value of the first counter is to be updated, set, or decremented to 0 through processing by the first apparatus).

In an optional implementation, the third message indicates a first apparatus to perform access, indicates information used to determine the initial value of the first counter, is used by at least one apparatus to obtain synchronization, is used to resolve contention on access of at least one apparatus, or is used to start a next round of access process; or the third message is used to decrement the value of the first counter by 1, indicates a next apparatus to perform access, indicates a next access occasion, is used by at least one apparatus to obtain synchronization, or is used to resolve contention on access of at least one apparatus. There may be a plurality of types of the third message. For example, if the value of the first counter is decremented to 0 after a message indicating a first apparatus to perform access is received, the message may be the third message; or if the value of the first counter is decremented to 0 after a message used to decrement the value of the first counter by 1 is received, the message may be the third message. Alternatively, the third message may be a message of another type. This is not limited.

In an optional implementation, the first indication information is included in a fourth message, where the fourth message indicates a first-type apparatus to perform access, or indicates a first-type apparatus to perform a first service, where the first apparatus is the first-type apparatus; the fourth message indicates a first apparatus to perform access, indicates information used to determine the initial value of the first counter, is used by at least one apparatus to obtain synchronization, is used to resolve contention on access of at least one apparatus, or is used to start a next round of access process; or the fourth message is used to decrement the value of the first counter by 1, indicates a next apparatus to perform access, indicates a next access occasion, is used by at least one apparatus to obtain synchronization, or is used to resolve contention on access of at least one apparatus. The fourth message may have a plurality of implementations, or the first indication information may be sent via different messages. In addition, the foregoing messages may alternatively be combined. For example, a message indicating a first-type apparatus to perform access may include partial information of the first indication information, and a message indicating a first apparatus to perform access includes remaining information of the first indication information, so that the first apparatus can obtain the first indication information based on the two messages.

In an optional implementation, the method further includes: receiving a fifth message; and if the fifth message includes the first random information, determining that is successful; otherwise, determining that access has failed. If a second apparatus receives the random information, the second apparatus may send the fifth message, where the fifth message may include the random information successfully received by the second apparatus. For example, the second apparatus may send the fifth message on each access occasion, and the fifth message may include random information successfully received by the second apparatus on the access occasion. In this case, for the first apparatus, if a fifth message received on an access occasion includes the first random information, the first apparatus may determine that access is successful on the access occasion, and does not need to perform access on a next access occasion; or if a fifth message received on an access occasion does not include the first random information, the first apparatus may determine that access has failed on the access occasion, and if there is a next access occasion, the first apparatus may perform access again.

In an optional implementation, the method is applied to an AIoT apparatus. For example, the first apparatus is an AIoT apparatus, or the first apparatus may be an apparatus of another type, for example, an IoT apparatus. This is not limited.

According to a second aspect, a second communication method is provided. The method is applied to a second apparatus side, that is, the method may be performed by a second apparatus. The second apparatus is, for example, an independent device, or a chip system or a functional module included in another device. The chip system or the functional module can implement a function of the second apparatus. The another device is, for example, a network device or a terminal device. The network device includes, for example, a reader or an interrogator, or may include an access network device and/or a core network device. The method includes: sending first indication information, where the first indication information indicates one or more of the following: a first duration, where the first duration indicates a latest time for sending random information on an access occasion; a first step size, where the first step size is a time interval between two access moments in the first duration; or a first quantity, where the first quantity indicates a quantity of access moments in the first duration; and detecting random information at a first access moment, where the first access moment is determined based on the first indication information, and the first indication information is used to determine a sending time of the random information.

In an optional implementation, that the first access moment is determined based on the first indication information includes: the first indication information is used to determine one or more moments, and the first access moment is one of the one or more moments; or the first indication information is used to determine one or more durations, the one or more durations include a second duration, the first access moment is a moment at which the second duration expires after the first moment, the first moment is a sending moment of a sixth message, and the sixth message indicates a first-type apparatus to perform access, indicates a first-type apparatus to perform a first service, indicates at least one apparatus to perform access, or is used to decrement a value of a first counter by 1, where the first counter is used to determine the sending time of the random information.

In an optional implementation, the method further includes: sending a first message, where the first message is used to decrement a value of a first counter or a second counter, and before the decrement, the value of the first counter or the second counter is a first value determined based on the first indication information.

In an optional implementation, the first indication information is used to determine one or more values, the one or more values include the first value, and the first access moment is determined based on the first value.

In an optional implementation, the method further includes: sending first information, where the first information is used to determine an initial value of the first counter, and the initial value is greater than or equal to 0.

In an optional implementation, the method further includes: sending a second message, where the second message is used to decrement the value of the first counter by 1.

In an optional implementation, the first indication information is determined based on a quantity of to-be-accessed apparatuses and/or the first information.

In an optional implementation, the first indication information is included in a fourth message, where the fourth message indicates a first-type apparatus to perform access, or indicates a first-type apparatus to perform a first service; the fourth message indicates at least one apparatus to perform access, indicates information used to determine the initial value of the first counter, is used by at least one apparatus to obtain synchronization, is used to resolve contention on access of at least one apparatus, or is used to start a next round of access process; or the fourth message is used to decrement the value of the first counter by 1, indicates a next apparatus to perform access, indicates a next access occasion, is used by at least one apparatus to obtain synchronization, or is used to resolve contention on access of at least one apparatus.

In an optional implementation, the method further includes: sending a fifth message, where the fifth message includes the random information.

For technical effects brought by the second aspect or the optional implementations, refer to the descriptions of the technical effects of the first aspect or the corresponding implementations.

According to a third aspect, a third communication method is provided. The method is applied to a first apparatus side, that is, the method may be performed by a first apparatus. For descriptions of the first apparatus, refer to the first aspect. The method includes: obtaining second indication information, where the second indication information indicates one or more of the following: a third duration, where the third duration indicates a latest time for sending random information on an access occasion; a second step size, where the second step size is a time interval between two access moments in the first duration; or a second quantity, where the second quantity indicates a quantity of access moments in the third duration; and sending second random information at a second access moment, where the second access moment is a moment after a second moment, the second moment is a moment at which the second indication information is received, and the second access moment is determined based on the second indication information.

In this embodiment of this application, when accessing a network, the first apparatus sends first random information at a third access moment after the second moment, instead of at the second moment. For example, the first apparatus waits for a period of time when the second moment arrives, and then performs the transmission at the third access moment. The waiting time period is determined based on the second indication information. For example, waiting times determined by different apparatuses based on the second indication information are different. In this case, even if two apparatuses have a same second moment on an access occasion (or a time unit), because waiting times of the two apparatuses are different, sending moments of the two apparatuses on the access occasion may be separated, thereby reducing a probability of collision between the apparatuses on the access occasion, and improving transmission quality. In addition, the first apparatus in this embodiment of this application does not need to maintain a counter. This helps simplify implementation of the first apparatus. In addition, because the first apparatus does not need to maintain a counter, a second apparatus does not need to send a QueryRep message, thereby reducing signaling overhead.

In an optional implementation, the second indication information is included in a seventh message, where the seventh message indicates a first-type apparatus to perform access, or indicates a first-type apparatus to perform a first service, where the first apparatus is the first-type apparatus; or the seventh message indicates a first apparatus to perform access, is used by at least one apparatus to obtain synchronization, is used to resolve contention on access of at least one apparatus, or is used to start a next round of access process. The seventh message may have a plurality of implementations, or the second indication information may be sent via different messages. In addition, the foregoing messages may alternatively be combined. For example, a message indicating a first-type apparatus to perform access may include partial information of the second indication information, and a message indicating a first apparatus to perform access includes remaining information of the second indication information, so that the first apparatus can obtain the second indication information based on the two messages.

In an optional implementation, the second indication information is used to determine one or more moments, and the second access moment is one of the one or more moments; or the second indication information is used to determine one or more durations, the one or more durations include a fourth duration, and the second access moment is a moment at which the fourth duration expires after the second moment.

In an optional implementation, the method further includes: receiving an eighth message; and if the eighth message includes the second random information, determining that is successful; otherwise, determining that access has failed.

In an optional implementation, the method is applied to an AIoT apparatus. For example, the first apparatus is an AIoT apparatus.

For technical effects brought by the third aspect or the optional implementations, refer to the descriptions of the technical effects of the first aspect or the corresponding implementations.

According to a fourth aspect, a fourth communication method is provided. The method is applied to a second apparatus side, that is, the method may be performed by a second apparatus. For descriptions of the second apparatus, refer to the second aspect. The method includes: sending second indication information, where the second indication information indicates one or more of the following: a third duration, where the third duration indicates a latest time for sending random information on an access occasion; a second step size, where the second step size is a time interval between two access moments in the first duration; or a second quantity, where the second quantity indicates a quantity of access moments in the third duration; and detecting random information at a second access moment, where the second access moment is determined based on the second indication information, and the second indication information is used to determine a sending time of the random information.

In an optional implementation, the second indication information is determined based on a quantity of to-be-accessed apparatuses.

In an optional implementation, the second indication information is included in a seventh message, where the seventh message indicates a first-type apparatus to perform access, or indicates a first-type apparatus to perform a first service; or the seventh message indicates at least one apparatus to perform access, is used by at least one apparatus to obtain synchronization, is used to resolve contention on access of at least one apparatus, or is used to start a next round of access process.

In an optional implementation, the second indication information is used to determine one or more moments, and the second access moment is one of the one or more moments; or the second indication information is used to determine one or more durations, the one or more durations include a fourth duration, and the second access moment is a moment at which the fourth duration expires after the second moment. The second moment is a sending moment of a seventh message. The seventh message indicates a first-type apparatus to perform access, indicates a first-type apparatus to perform a first service, or indicates at least one apparatus to perform access.

In an optional implementation, the method further includes: sending an eighth message, where the eighth message includes the random information.

For technical effects brought by the fourth aspect or the optional implementations, refer to the descriptions of the technical effects of the third aspect or the corresponding implementations.

According to a fifth aspect, a communication apparatus is provided. The communication apparatus may be the first apparatus according to any one of the first aspect to the fourth aspect. The communication apparatus has a function of the first apparatus. The communication apparatus is, for example, an independent device, or a functional module or a chip system (or a chip) included in another device. The chip system or the functional module can implement the function of the first apparatus. The another device is, for example, a network device or a terminal device. Optionally, the network device includes, for example, an interrogator, a reader, an access network device, or a core network device. The terminal device includes, for example, a tag. In an optional implementation, the communication apparatus includes a baseband apparatus and a radio frequency apparatus. In another optional implementation, the communication apparatus includes a processing unit (or referred to as a processing module sometimes) and a transceiver unit (or referred to as a transceiver module sometimes). The transceiver unit can implement a sending function and a receiving function. When the transceiver unit implements the sending function, the transceiver unit may be referred to as a sending unit (or referred to as a sending module sometimes). When the transceiver unit implements the receiving function, the transceiver unit may be referred to as a receiving unit (or referred to as a receiving module sometimes). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for these functional modules.

In an optional implementation, the processing unit is configured to obtain first indication information, where the first indication information indicates one or more of the following: a first duration, where the first duration indicates a latest time for sending random information on an access occasion; a first step size, where the first step size is a time interval between two access moments in the first duration; or a first quantity, where the first quantity indicates a quantity of access moments in the first duration; and the transceiver unit (or the sending unit) is configured to send first random information at a first access moment, where the first access moment is a moment after a first moment, the first moment is a moment related to a value of a first counter becoming 0, the first access moment is determined based on the first indication information, and the first counter is configured to determine a sending time of the first random information.

In an optional implementation, the processing unit is configured to obtain second indication information, where the second indication information indicates one or more of the following: a third duration, where the third duration indicates a latest time for sending random information on an access occasion; a second step size, where the second step size is a time interval between two access moments in the first duration; or a second quantity, where the second quantity indicates a quantity of access moments in the third duration; and the transceiver unit (or the sending unit) is configured to send second random information at a second access moment, where the second access moment is a moment after a second moment, the second moment is a moment at which the second indication information is received, and the second access moment is determined based on the second indication information.

In an optional implementation, the communication apparatus further includes a storage unit (or referred to as a storage module sometimes). The processing unit is configured to be coupled to the storage unit, and execute a program or instructions in the storage unit, so that the communication apparatus performs the function of the first apparatus according to any one of the first aspect to the fourth aspect.

According to a sixth aspect, a communication apparatus is provided. The communication apparatus may be the second apparatus according to any one of the first aspect to the fourth aspect. The communication apparatus has a function of the second apparatus. The communication apparatus is, for example, an independent device, or a functional module or a chip system (or a chip) included in another device. The chip system or the functional module can implement the function of the second apparatus. The another device is, for example, a network device or a terminal device. Optionally, the network device includes, for example, an interrogator, a reader, an access network device, or a core network device. The terminal device includes, for example, a tag. In an optional implementation, the communication apparatus includes a baseband apparatus and a radio frequency apparatus. In another optional implementation, the communication apparatus includes a processing unit (or referred to as a processing module sometimes) and a transceiver unit (or referred to as a transceiver module sometimes). For an implementation of the transceiver unit, refer to the descriptions of the fifth aspect.

In an optional implementation, the transceiver unit (or the sending unit) is configured to send first indication information, where the first indication information indicates one or more of the following: a first duration, where the first duration indicates a latest time for sending random information on an access occasion; a first step size, where the first step size is a time interval between two access moments in the first duration; or a first quantity, where the first quantity indicates a quantity of access moments in the first duration; and the transceiver unit (or the receiving unit) is configured to detect random information at a first access moment, where the first access moment is determined based on the first indication information, and the first indication information is used to determine a sending time of the random information.

In an optional implementation, the transceiver unit (or the sending unit) is configured to send second indication information, where the second indication information indicates one or more of the following: a third duration, where the third duration indicates a latest time for sending random information on an access occasion; a second step size, where the second step size is a time interval between two access moments in the first duration; or a second quantity, where the second quantity indicates a quantity of access moments in the third duration; and the transceiver unit (or the receiving unit) is configured to detect random information at a second access moment, where the second access moment is determined based on the second indication information, and the second indication information is used to determine a sending time of the random information.

In an optional implementation, the communication apparatus further includes a storage unit (or referred to as a storage module sometimes). The processing unit is configured to be coupled to the storage unit, and execute a program or instructions in the storage unit, so that the communication apparatus performs the function of the second apparatus according to any one of the first aspect to the fourth aspect.

According to a seventh aspect, a communication apparatus is provided. The communication apparatus may be a first apparatus. The first apparatus is, for example, an independent device, or a chip or a chip system used in another device. The another device includes, for example, a network device or a terminal device. The communication apparatus includes a processor, and the processor is configured to cause the communication apparatus to perform the methods performed by the first apparatus in the foregoing aspects. Optionally, the processor is coupled to a memory. When the processor reads a computer program or instructions, the communication apparatus is caused to perform the methods performed by the first apparatus in the foregoing aspects. The memory is configured to store the computer program or the instructions, and may be included in the communication apparatus, or may be disposed outside the communication apparatus. Optionally, the communication apparatus further includes a communication interface, and the processor invokes the computer program or the instructions from the communication interface and runs the computer program or the instructions.

According to an eighth aspect, a communication apparatus is provided. The communication apparatus may be a second apparatus. The second apparatus is, for example, an independent device, or a chip or a chip system used in another device. The another device includes, for example, a network device or a terminal device. The communication apparatus includes a processor, and the processor is configured to cause the communication apparatus to perform the methods performed by the second apparatus in the foregoing aspects. Optionally, the processor is coupled to a memory. When the processor reads a computer program or instructions, the communication apparatus is caused to perform the methods performed by the second apparatus in the foregoing aspects. The memory is configured to store the computer program or the instructions, and may be included in the communication apparatus, or may be disposed outside the communication apparatus. Optionally, the communication apparatus further includes a communication interface, and the processor invokes the computer program or the instructions from the communication interface and runs the computer program or the instructions.

According to a ninth aspect, a communication system is provided, including a first apparatus and a second apparatus. The first apparatus is configured to perform the method performed by the first apparatus in either of the first aspect or the second aspect, and the second apparatus is configured to perform the method performed by the second apparatus in either of the first aspect or the second aspect; or the first apparatus is configured to perform the method performed by the first apparatus in either of the third aspect or the fourth aspect, and the second apparatus is configured to perform the method performed by the second apparatus in either of the third aspect or the fourth aspect. For example, the first apparatus may be implemented by using the communication apparatus according to the fifth aspect or the seventh aspect, and the second apparatus may be implemented by using the communication apparatus according to the sixth aspect or the eighth aspect. Optionally, the communication system may further include another apparatus, for example, a first-type apparatus. This is not limited.

According to a tenth aspect, a computer-readable storage medium is provided. The computer-readable storage medium is configured to store a computer program or instructions. When the computer program or the instructions are run, the method performed by the first apparatus and/or the method performed by the second apparatus in the foregoing aspects is implemented.

According to an eleventh aspect, a computer program product including instructions is provided, where when a computer program or the instructions are run on a computer, the methods according to the foregoing aspects are implemented.

According to a twelfth aspect, a chip system is provided, including a processor and an interface. The processor is configured to invoke instructions from the interface and run the instructions, so that the chip system implements the methods according to the foregoing aspects.

### BRIEF DESCRIPTION OF DRAWINGS

FIG. 1 is a diagram of a working manner of a reader and a tag;
FIG. 2 is a flowchart of communication between an AIoT device and a network device according to an embodiment of this application;
FIG. 3 to FIG. 7 are diagrams of several communication systems to which embodiments of this application are applicable;
FIG. 8 to FIG. 10 are flowcharts of several communication methods according to embodiments of this application;
FIG. 11 is a diagram of an apparatus according to an embodiment of this application; and
FIG. 12 is a diagram of another apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

In embodiments of this application, unless otherwise specified, a quantity of nouns represents "a singular noun or plural nouns", that is, "one or more". "At least one" means one or more, and "a plurality of" means two or more. The term "and/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof refers to any combination of these items, including any combination of singular items (pieces) or plural items (pieces). For example, at least one of a, b, or c indicates a, b, c, a and b, a and c, b and c, or a, b, and c, where a, b, and c may be singular or plural.

Ordinal numbers such as "first" and "second" described in embodiments of this application are used to distinguish between a plurality of objects, but are not used to limit sizes, content, sequences, time sequences, priorities, importance, or the like of the plurality of objects. In addition, step numbers in embodiments described in this application are merely used to distinguish between different steps, but are not used to limit a sequence of the steps. For example, S801 may be performed before S802, may be performed after S802, or may be performed at the same time with S802.

The following describes some terms or concepts in embodiments of this application, to facilitate understanding of a person skilled in the art.
(1) In embodiments of this application, a terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the device. The terminal device is configured to connect people, things, machines, and the like, and may be widely used in various scenarios. For example, the terminal device includes but is not limited to terminal devices in scenarios such as a sensing scenario, cellular communication, device-to-device (device-to-device, D2D) communication, vehicle-to-everything (vehicle-to-everything, V2X), machine-to-machine/machine-type communication (machine-to-machine/machine-type communication, M2M/MTC), internet of things (internet of things, IoT), virtual reality (virtual reality, VR), augmented reality (augmented reality, AR), industrial control (industrial control), self-driving (self-driving), telemedicine (remote medical), a smart grid (smart grid), smart furniture, smart office, smart wearables, smart transportation, a smart city (smart city), an uncrewed aerial vehicle, a robot, and indoor commercial scenarios (such as mobile phone projection, file sharing, and video transmission from a mobile phone to VR glasses). The terminal device may also be referred to as a V2X device when used in V2X, for example, a smart car (smart car or intelligent car), a digital car (digital car), an unmanned car (unmanned car, driverless car, pilotless car, or automobile), a self-driving car (self-driving car or autonomous car), a pure electric vehicle (pure EV or Battery EV), a hybrid electric vehicle (hybrid electric vehicle, HEV), a range extended electric vehicle (range extended EV, REEV), a plug-in hybrid electric vehicle (plug-in HEV, PHEV), a new energy vehicle (new energy vehicle), or a road side unit (road site unit, RSU). Alternatively, the terminal device may be a device, for example, an electricity meter or a water meter, in the D2D communication.

In addition, in embodiments of this application, the terminal device may further include a terminal device in an IoT system, for example, a tag (tag) in the IoT system. An IoT is an important part of future development of information technologies. A main technical feature of the IoT is connecting a thing to a network by using a communication technology, to implement an intelligent network for interconnection between a person and a machine or between things.

The terminal device may be sometimes referred to as a UE, a terminal, an access station, a UE station, a remote station, a wireless communication device, a user apparatus, or the like.

In embodiments of this application, a communication apparatus configured to implement a function of the terminal device may be a terminal device, or may be an apparatus that can support the terminal device in implementing the function, for example, a chip system. The apparatus may be installed in the terminal device. In the technical solutions provided in embodiments of this application, an example in which the apparatus configured to implement the function of the terminal device is the terminal device is used for describing the technical solutions provided in embodiments of this application. In addition, for ease of description, an example in which the terminal device is a UE is used for description in embodiments of this application.

(2) A network device in embodiments of this application includes, for example, an access network device and/or a core network device. The access network device is a device having a wireless transceiver function, and is configured to communicate with the terminal device. The access network device includes but is not limited to a base station (a base transceiver station (base transceiver station, BTS), a NodeB (NodeB), an evolved NodeB (evolved NodeB, eNodeB)/eNB, or a next generation NodeB (next generation NodeB, gNodeB)/gNB), a transmission reception point (transmission reception point, TRP), a base station evolved after a 3rd generation partnership project (3rd generation partnership project, 3GPP), an access node in a wireless fidelity (wireless fidelity, Wi-Fi) system, a wireless relay node, a wireless backhaul node, and the like. The base station may be a macro base station, a micro base station, a picocell base station, a small cell, a relay station, or the like. A plurality of base stations may support networks using a same access technology, or may support networks using different access technologies. The base station may include one or more co-site or non-co-site transmission reception points. Alternatively, the access network device may be a radio controller in a cloud radio access network (cloud radio access network, CRAN) scenario, a central unit (central unit, CU), and/or a distributed unit (distributed unit, DU). Alternatively, the access network device may be a server or the like. For example, a network device in a V2X technology may be a road side unit (road side unit, RSU). The following uses an example in which the access network device is a base station for description. The base station may communicate with the terminal device, or may communicate with the terminal device via a relay station. The terminal device may communicate with a plurality of base stations in different access technologies. The core network device is configured to implement functions such as mobility management, data processing, session management, and policy and charging. Names of devices that implement core network functions in systems of different access technologies may be different. This is not limited in embodiments of this application. A 5th generation (5th generation, 5G) mobile communication technology system is used as an example. For example, the core network device includes an access and mobility management function (access and mobility management function, AMF), a session management function (session management function, SMF), a policy control function (policy control function, PCF), a user plane function (user plane function, UPF), or the like.

In a CU-DU architecture, the access network device may include one or more of logical network elements such as a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an open (open RAN, ORAN) system, the CU may also be referred to as an open CU (open CU, O-CU), the DU may also be referred to as an open DU (open DU, O-DU), the CU-CP may also be referred to as an open CU-CP (open CU-CP, O-CU-CP), the CU-UP may also be referred to as an open CU-UP (open CU-CP, O-CU-UP), and the RU may also be referred to as an open RU (open RU, O-RU). For ease of description, in embodiments of this application, the CU, the CU-CP, the CU-UP, the DU, and the RU are used as examples for description. Any one of the CU (or the CU-CP and the CU-UP), the DU, and the RU in embodiments of this application may be implemented by a software module, a hardware module, or a combination of a software module and a hardware module.

Optionally, in embodiments of this application, if the network device is in a distributed architecture, for example, the network device includes a CU and a DU, or includes a CU-CP, a CU-UP, and a DU, that the network device sends information to the UE may be specifically that the DU included in the network device sends information to the UE; and that the network device receives information from the UE may be specifically that the DU included in the network device receives information from the UE.

In addition, in embodiments of this application, the network device may further include a network device in an IoT system, for example, a reader (reader) or an interrogator (interrogator) in the IoT system.

In embodiments of this application, a communication apparatus configured to implement a function of the network device may be a network device, or may be an apparatus that can support the network device in implementing the function, for example, a chip system. The apparatus may be installed in the network device. In the technical solutions provided in embodiments of this application, an example in which the apparatus configured to implement the function of the network device is a network device is used for describing the technical solutions provided in embodiments of this application.

### (3) Devices in an IoT system

The IoT may include a variety of devices, such as AIoT devices that do not need batteries or have limited energy storage. For example, the AIoT devices may have two types: a type 1 and a type 2. An AIoT device of the type 1 has output power consumption of about 1 µW, has a specific energy storage capability, and has no capability of amplifying a downlink signal and an uplink signal. The type 1 can perform transmission of information only through backscatter (backscatter) by using an externally provided carrier wave (carrier wave), and cannot generate a signal.

A peak power of an AIoT device of the type 2 does not exceed hundreds of µW, has an energy storage capability, and has a capability of amplifying a downlink signal and/or an uplink signal. The AIoT device of the type 2 can generate a signal, or may implement backscatter of a signal by using an external carrier wave.

Alternatively, the AIoT device may further include a device of another type, for example, a device that has no energy storage capability. This is not limited. "Energy storage" in embodiments of this application may also be understood as capability storage.

A tag may also be referred to as an electronic tag, a tag device, or the like. For example, a tag is implemented through an AIoT device, and the tag may also be referred to as an AIoT tag. In embodiments of this application, the tag may be used as a terminal device to communicate with a network device. The "tag" is merely an optional name, and the name may be changed. For example, the "AIoT tag" may be changed to another name. The name is not limited in embodiments of this application. For ease of description, the "tag" is still used as an example below.

In a classification manner 1, tags may be classified into three types: a passive tag (passive tag), a semi-passive tag (semi-passive tag), and an active tag (active tag). The passive tag and the semi-passive tag may use a backscatter-based communication mode, and the active tag uses a communication mode of actively generating a carrier wave.

In a classification manner 2, tags may also be classified into three types: a device A (device A), a device B (device B), and a device C (device C). The device A has no energy storage, cannot independently generate a signal, and performs transmission of a signal through backscatter. The device B has energy storage but cannot independently generate a signal, and performs transmission of a signal through backscatter. Energy stored in the device B may amplify a backscattered signal. The device C has energy storage, can independently generate a signal, and has an active radio frequency element for transmission.

The AIoT tags in embodiments of this application may be classified in the classification manner 1 or the classification manner 2, and embodiments of this application are applicable to an AIoT tag of any type in the classification manner 1 or the classification manner 2. Alternatively, the AIoT tags in embodiments of this application are not classified in the two classification manners, but are classified in the foregoing classification manner of the AIoT devices. In addition, embodiments of this application are applicable to an AIoT tag of any type in the classification manner. Alternatively, the AIoT tags in embodiments of this application may be further classified in another manner or not classified. This is not limited.

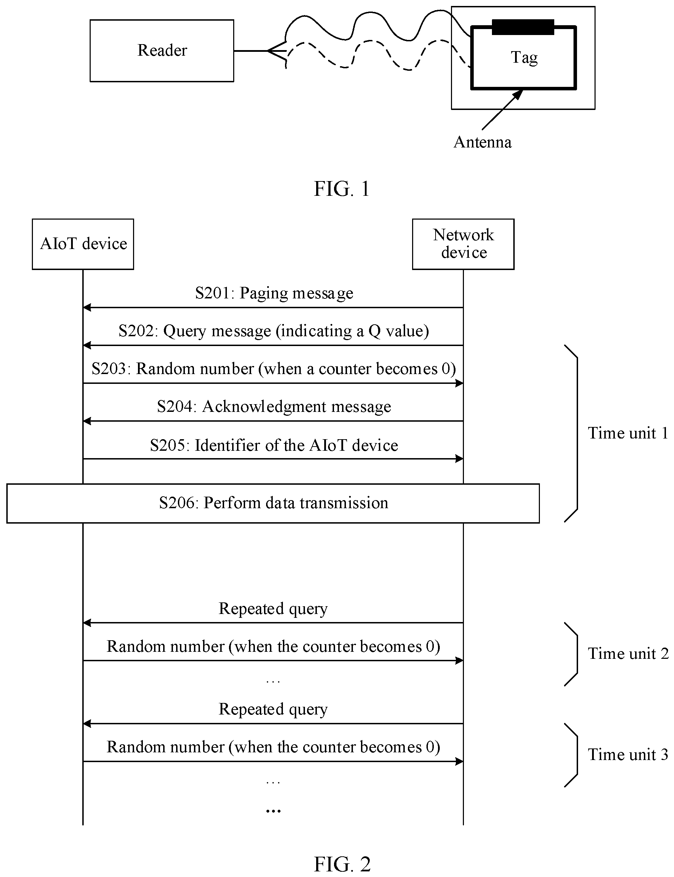

The tag receives downlink signals by using a low-precision, low-power consumption, medium- or low-frequency ring oscillator or without using a local oscillator. During operation of the tag, energy and/or a carrier wave for communication is provided by a reader, and the communication is performed based on a backscatter carrier wave. For example, as shown in FIG. 1, a reader may send a carrier wave signal to a tag, and the tag receives the carrier wave signal through an antenna. A solid line in the figure is the carrier wave signal sent by the reader, and a dashed line indicates a backscattered signal transmitted by the tag through backscatter based on the carrier wave signal. The tag may adjust, in the backscattered signal, information that needs to be transmitted. In the foregoing manner, the tag receives downlink signals by using a low-precision, low-power consumption, medium- or low-frequency ring oscillator or without using a local oscillator, so that power consumption of the tag during downlink reception can be further reduced. Optionally, the carrier wave may also be understood as an excitation signal, and the carrier wave may be sent by an apparatus other than the reader.

The tag is a micro wireless transceiver apparatus, mainly including a built-in tag device antenna, a coupling element, and a chip. The chip of the tag has storage space that can support the reader in reading or writing tag data. After receiving, through the antenna, a radio frequency signal sent by the reader, the tag may implement coupling on the radio frequency signal through the coupling element, so that energy can be provided for the chip of the tag within a coupling channel, and data stored in the chip can be fed back to the reader through the antenna. A communication network based on a cellular network infrastructure and including a reader and a tag may be referred to as a passive (passive) IoT network or an AIoT.

The AIoT may be applied to a passive or semi-passive IoT scenario. For example, in a logistics and warehousing scenario, a tag (for example, an AIoT tag) may be used for goods inventory and tracking, and status monitoring on the goods in a goods transportation process. For another example, in an industrial manufacturing scenario, the tag may be used to perform environment monitoring and device status monitoring.

In the AIoT, at least one of the following operations may be performed between the tag (for example, an AIoT tag) and the reader: an inventory operation, a read (read) operation, a write (write) operation, a kill (kill) operation, or a lock (lock) operation.

The inventory (inventory) operation may also be referred to as a stocktaking operation, and an identifier of the tag may be obtained through the inventory operation. For example, the reader may obtain the identifier of the tag by using commands such as query (query) and acknowledgment (acknowledged, ACK). To facilitate stocktaking of the tag, the tag may include four session (session) identifiers in total: S0 to S3. Each session identifier corresponds to two inventory states: A and B. The inventory state is indicated by an inventory flag (sessInventoried flag). When the reader selects a tag, a select (select) command sent to the tag may carry a session identifier, and the tag may store the session identifier. When the reader performs the inventory operation on the tag, a query command sent to the tag includes the session identifier. In this case, the tag may toggle an inventory state corresponding to the session identifier from A to B. If the reader sends the query command again to perform the inventory operation, because the inventory state in the tag is B, the tag does not respond to the reader, thereby avoiding a case in which the same tag is inventoried a plurality of times in one inventory periodicity.

The read operation may be used to read an electronic product code (electronic product code, EPC) or a tag identifier (tag identifier, TID) in a storage area of the tag, read content stored in a reserved area of the tag or content stored in a user storage area, or the like.

The write operation may be performed on the storage area of the tag.

The kill operation can render the tag permanently non-functional.

The lock operation may be used to lock information about the tag, to prevent the read operation or the write operation on the tag. Alternatively, the lock operation may be used to lock the storage area of the tag, to prohibit the read operation or the write operation on the storage area.

The foregoing operations are merely examples. Other operations may be further performed between the tag and the reader, and are not enumerated herein.

In the AIoT, an AIoT device may first access a network device, and then perform data transmission with the network device. The network device is, for example, a reader or an interrogator. FIG. 2 shows a communication procedure between an AIoT device and a network device according to an embodiment of this application. In descriptions of FIG. 2, an example in which the network device is to perform an inventory service on the AIoT device is used.

S201: The network device sends a message 1. Correspondingly, the AIoT device receives the message 1.

The message 1 may indicate to perform inventory or stocktaking on the AIoT device. For example, if the network device is to perform stocktaking on the AIoT device, the network device may send the message 1. The message 1 is, for example, a select (select) message or a paging (paging) message. In FIG. 2, an example in which the message 1 is a paging message is used.

S201 may be included in a first process, and the first process is, for example, a selection process or a paging process.

S202: The network device sends a message 2. Correspondingly, the AIoT device receives the message 2.

The message 2 may be used by one or more AIoT devices to send a random number (random data, RN) based on the message 2. For example, the message 2 is also referred to as a request (query) message. In FIG. 2, an example in which the message 2 is referred to as the request message is used.

The message 2 may indicate a Q value, and the AIoT device that receives the message 2 may determine an initial value of a counter based on the Q value.

S203: The AIoT device sends a random number. Correspondingly, the network device receives the random number.

The AIoT device may send the random number when a corresponding condition is met. The condition includes, for example, that the counter maintained by the AIoT device is 0. For example, after receiving the message 2, the AIoT device may determine a value based on the message 2, and the value may be used as the initial value of the counter. For example, the value is any number in (0,2^{Q} - 1). When the counter is decremented from the initial value to 0, the AIoT device may send the random number.

If the initial value is 0, the AIoT device may send the random number. Alternatively, if the initial value is not 0, the AIoT device may sequentially decrement a value of the counter. For example, the AIoT device may receive a message 3 from the network device. Each time the AIoT device receives the message 3, the AIoT device may decrement the value of the counter by 1, until the value of the counter becomes 0. The message 3 is, for example, a repeated request (QueryRep) message.

In an inventory process, one or more rounds of access processes may be performed. For example, if not all AIoT devices to be inventoried have been successfully accessed in one round of the access process, a next round of access process may be performed. In a round of access process, one or more time units may be included. Each time unit may also be referred to as a slot, or may be referred to as an access occasion (or referred to as an access occasion or the like). The following uses the access occasion for description. The "slot" herein and an orthogonal frequency division multiplexing (orthogonal frequency division multiplexing, OFDM) slot (slot) may not be a same concept. For example, lengths of the "slot" and the OFDM slot may be the same or different. In addition, lengths of different access occasions included in an access process may be the same or different. For example, the length of the access occasion may be controlled by the network device.

On an access occasion, there may be one or more AIoT devices that can send random numbers, for example, counters of these AIoT devices are 0; while there may also be some AIoT devices that cannot send random numbers, for example, counters of these AIoT devices are not 0. The network device sends the message 3 only once in a time unit, and the network device sends the message 2 also only once in a time unit. The message 2 and the message 3 are not configured in a same time unit. For example, in a round of access process, the network device sends the message 2 in a 1^{st} time unit, and sends the message 3 in another subsequent time unit. For this, refer to FIG. 2. In FIG. 2, three time units are used as an example.

For an AIoT device, if a value of a counter of the AIoT device in a 1^{st} time unit in a round of access process is 0 (that is, an initial value of the counter is 0), the AIoT device may send a random number in the 1^{st} time unit, and does not need to receive the message 3 in a subsequent time unit. Alternatively, if the value of the counter of the AIoT device is not 0 in the 1^{st} time unit, the AIoT device does not send the random number in the 1^{st} time unit, but waits to receive the message 3 in a 2^{nd} time unit in the round of access process. In the 2^{nd} time unit, if the value of the counter of the AIoT device is decremented to 0, the AIoT sends the random number in the 2^{nd} time unit. Otherwise, the AIoT device continues to receive the message 3 in a 3^{rd} time unit in the round of access process. The rest can be deduced by analogy.

Optionally, the method may further include the following S204 and S205.

S204: The network device sends an acknowledgment message. Correspondingly, the AIoT device receives the acknowledgment message. The acknowledgment message is, for example, an acknowledgment (ACK).

The acknowledgment message may include the random number received by the network device. For an AIoT device, if the received acknowledgment message includes a random number sent by the AIoT device, it indicates that the AIoT device successfully accesses the network device, or the random number is successfully sent; or if the acknowledgment message does not include the random number sent by the AIoT device, it indicates that the AIoT device fails to access the network device, or the random number fails to be sent.

S205: The AIoT device sends an identifier of the AIoT device. The network device receives the identifier of the AIoT device.

For example, if an AIoT device determines that the AIoT successfully accesses the network device, or a random number is successfully sent, the AIoT device may send an identifier of the AIoT device, so that the network device obtains the identifier of the AIoT device. For example, the identifier of the AIoT device may include an EPC or a TID of the AIoT device.

S202 to S205 may be included in a second process. The second process is, for example, referred to as an inventory process, referred to as a random access process, or referred to as a process used for accessing a network by the AIoT device. In the second process, the network device may obtain the identifier of the AIoT device.

Optionally, the communication procedure may further include S206: The AIoT device and the network device perform data transmission.

In S206, for example, the network device may send a downlink command (downlink command, DL command), where the DL command may indicate a corresponding operation, for example, a read operation or a write operation. For example, if the DL command is the read operation, the DL command may indicate a feature of to-be-read data. For another example, if the DL command is the write operation, the DL command may include data to be written into the AIoT device. Optionally, the DL command may further include the identifier of the AIoT device, so that the AIoT device determines whether to execute the DL command.

After receiving the DL command, the AIoT device may perform the corresponding operation based on the DL command. For example, if the DL command is the read operation, the AIoT device may read, from a storage area of the AIoT device, data that meets a feature of data indicated by the read operation, and send the data, so that the network device receives the data. For another example, if the DL command is the write operation, the AIoT device may write data carried in the DL command into the storage area of the AIoT device.

S206 may be included in a third process. The third process is, for example, referred to as an access (access) process, or referred to as a command process. In the third process, the network device can implement an operation on the AIoT device.

It can be learned from FIG. 2 that this embodiment of this application provides a manner for the AIoT device to access the network, so that the AIoT device can communicate with the network. In addition, it can be learned from the communication procedure described in FIG. 2 that, in one time unit in a round of access process, there may be a plurality of AIoT devices that can send random numbers. This may cause a conflict in a sending process, and affect transmission quality.

In view of this, in this embodiment of this application, when accessing a network, a first apparatus (for example, an AIoT apparatus) sends first random information at a first access moment after a first moment, instead of at the first moment. The first moment is, for example, a moment related to a value of a first counter becoming 0. For example, the first moment may be a moment at which the value of the first counter becomes 0; or the first moment may be a moment at which a message that causes the value of the first counter to become 0 is received. For example, after receiving the message, the first apparatus may decrement the value of the first counter, and the value of the first counter after the decrement is 0. Specific implementation of the message is described in the following embodiments. For example, the first apparatus waits for a period of time when the first moment arrives, and performs the transmission at the first access moment. The waiting time period is determined based on the first indication information. For example, waiting times determined by different apparatuses based on the first indication information are different. In this case, even if two apparatuses have a same first moment on an access occasion (or a time unit), because waiting times of the two apparatuses are different, sending moments of the two apparatuses on the access occasion may be separated, thereby reducing a probability of collision between the apparatuses on the access occasion, and improving transmission quality.

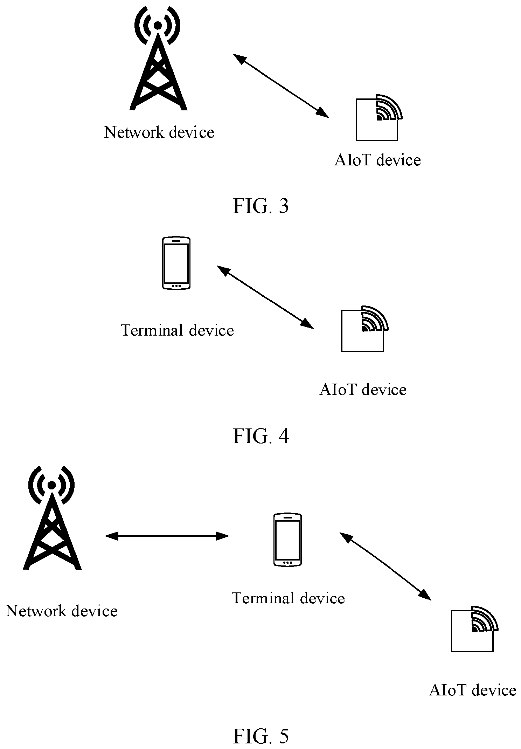

FIG. 3 is a diagram of a communication system to which an embodiment of this application is applicable. As shown in FIG. 3, the communication system includes a network device and an AIoT device. The AIoT device may be an independent device, or the AIoT device may be integrated with a terminal device, that is, the AIoT device is a part of the terminal device. In the communication system, the network device may communicate with the AIoT device.

FIG. 4 is a diagram of another communication system to which an embodiment of this application is applicable. As shown in FIG. 4, the communication system includes a terminal device and an AIoT device. The AIoT device may be an independent device, or the AIoT device may be integrated with the terminal device. In the communication system, a terminal device may communicate with the AIoT device.

FIG. 5 is a diagram of another communication system to which an embodiment of this application is applicable. As shown in FIG. 5, the communication system includes a network device, a relay node, and an AIoT device. The relay node forwards information between the network device and the AIoT device. In FIG. 5, an example in which a terminal device is used as the relay node is used. The relay node may alternatively be a device other than the terminal device, for example, a network device. For example, the network device is located outdoors, and the terminal device and the AIoT device are located indoors. This is equivalent to that the outdoor network device communicates with the indoor AIoT device through the indoor relay node.

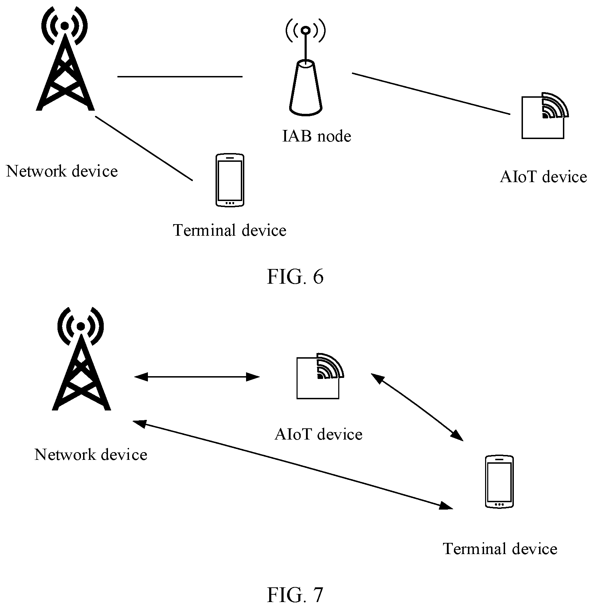

FIG. 6 is a diagram of another communication system to which an embodiment of this application is applicable. As shown in FIG. 6, the communication system includes a network device, an integrated access and backhaul (integrated access and backhaul, IAB) node, and an AIoT device. The communication system may further include another device, for example, a terminal device. In the communication system, the IAB node may be used as a relay node between the network device and the AIoT device. The AIoT device transmits information to the IAB node, and the IAB node forwards the information to the network device through a Uu interface. Alternatively, the network device transmits information to the IAB node, and the IAB node forwards the information to the AIoT device.

In embodiments of this application, a communication system including a network device, a terminal device, and an AIoT device may alternatively be a system of a separated architecture. As shown in FIG. 7, in the communication system, the network device and the terminal device may directly communicate with each other. In addition, there may be an uplink connection between the AIoT device and the network device, and there may be a downlink connection between the AIoT and the terminal device. The terminal device may transmit information to the AIoT device, and the AIoT device forwards the information to the network device. Alternatively, there is a downlink connection between the AIoT device and the network device, and there is an uplink connection between the AIoT device and the terminal device. The network device may transmit information to the AIoT device, and the AIoT device forwards the information to the terminal device. Optionally, energy needed by the AIoT device to send information may be provided by an excitation signal. The excitation signal may be from the network device, or may be from the terminal device, or may be from a device other than the network device and the terminal device.

The network architecture, the foregoing communication procedure, and the like described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

The following describes, with reference to the accompanying drawings, methods provided in embodiments of this application. In embodiments of this application, for related concept descriptions of an "access occasion", refer to the embodiment shown in FIG. 2. In embodiments of this application, random information may include information related to access. For example, the information is used by an AIoT apparatus (for example, a first apparatus) to perform access. An access process is, for example, a random access process. In this case, the random information may be information related to random access. The random information includes, for example, one or more of a random number, a random value, a preamble (preamble), a random identifier, or an identifier, or may further include other information. In the accompanying drawings corresponding to embodiments of this application, all steps represented by dashed lines are optional steps. Embodiments of this specification may be applied to the network architecture shown in any one of FIG. 3 to FIG. 7. For example, a second apparatus in embodiments of this specification may be the network device in any one of FIG. 3, FIG. 5, FIG. 6, or FIG. 7, and a first apparatus in embodiments of this specification may be the AIoT device in any one of FIG. 3 to FIG. 7. Alternatively, the second apparatus in embodiments of this specification may be the terminal device in FIG. 4, and the first apparatus in embodiments of this specification may be the AIoT device in FIG. 4.

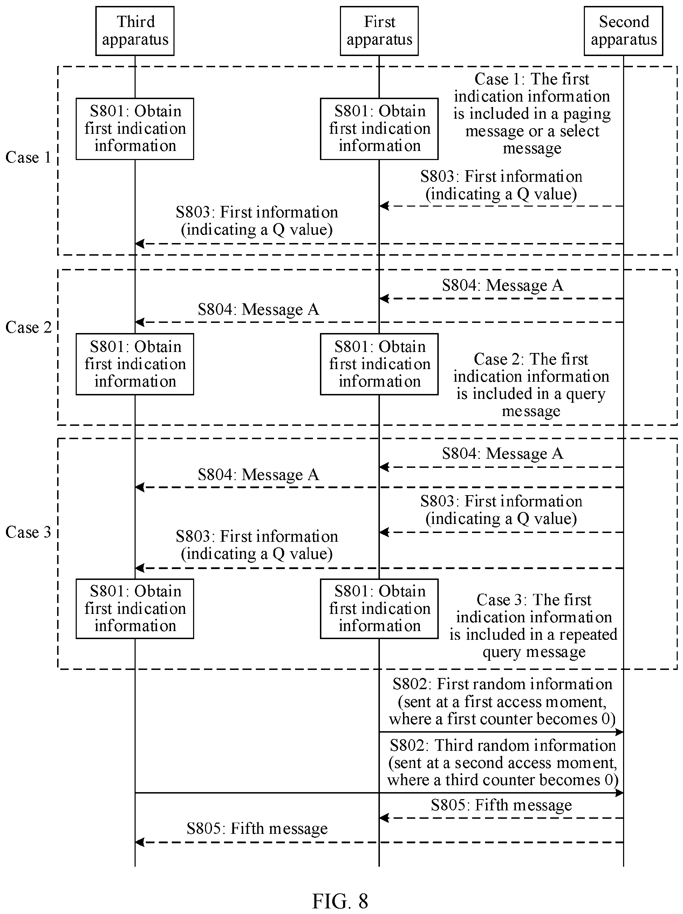

An embodiment of this application provides a communication method. FIG. 8 is a flowchart of the method.

S801: A first apparatus obtains first indication information.

The first apparatus may determine, based on the first indication information, a time for sending random information. Alternatively, in this embodiment of this application, a time at which the random information can be sent or the time for sending the random information may be referred to as an access moment, and the first apparatus may determine, based on the first indication information, the access moment for sending the random information. Optionally, the first indication information may indicate one or more of the following: a first duration, a first step size, or a first quantity.

The first duration may indicate a latest time for sending the random information on an access occasion. For example, on an access occasion, a time at which each apparatus sends random information may be earlier than or equal to the latest time indicated by the first duration. On the access occasion, a second apparatus may continuously detect random information, and stop detecting random information until the latest time arrives, so that the random information from each apparatus can be received. For example, the first duration may also be referred to as a maximum response time, a random response time, a latest response time, a latest time for sending a random number, or the like. A name of the first duration is not limited. It may be understood that the first duration may be a maximum response time, a random response time, a latest response time, a latest time for sending a random number, or the like on an access occasion.

In an optional implementation, the first duration may include a processing time, and the processing time may be used for the first apparatus to perform one or more of the following: processing a message received from the second apparatus, processing a counter, generating random information, or the like. For example, the processing time may include a time from when the first apparatus receives the message from the second apparatus to when the first apparatus completes processing on the counter (for example, a first counter) based on the message. Optionally, the message from the second apparatus is, for example, a message that causes a value of the first counter to become 0. This is described below. Optionally, the processing time is, for example, determined by the second apparatus based on historical information or empirical information. The processing time is not only applicable to the second apparatus, but also applicable to another apparatus.

For example, if the first duration includes the processing time, the first moment may be a moment at which the first apparatus receives a third message, and the third message may be used to determine that the value of the first counter is 0. Features such as the first moment and the first counter are described below.

In another optional implementation, the first duration may not include the processing time. For example, the first moment may be a moment at which the value of the first counter becomes 0, or a moment at which the first apparatus generates first random information after the value of the first counter becomes 0.

The first step size is a time interval between two access moments in the first duration. The first duration may include one or more access moments, and the first step size is, for example, a time interval between two access moments adjacent in time in the first duration. Optionally, time intervals between different adjacent access moments in the first duration may be the same. In other words, the first duration may be equally divided into a plurality of time periods, and a length of each time period may be the first step size.

Because different apparatuses can all obtain the first indication information (for example, in FIG. 8, the first apparatus and a third apparatus are included, and both the first apparatus and the third apparatus can obtain the first indication information), the different apparatuses each determine, based on the first indication information, a time for sending random information. If the first step size is less than the time for sending the random information, and times that are determined by the two apparatuses and that are used for sending the random information are two adjacent access moments indicated by the first indication information, sending by the two apparatuses may still collide. Therefore, optionally, the first step size may be greater than or equal to the time for sending the random information, to further reduce transmission collisions.

The first quantity may indicate a quantity of access moments included in the first duration. Either or both of two access moments, which are a start moment and an end moment of the first duration, may be considered as included in the first duration, or may be considered as not included in the first duration. For example, if the start moment of the first duration is considered as included in the first duration, and the end moment of the first duration is considered as not included in the first duration, the quantity of access moments included in the first duration that is indicated by the first quantity may be equal to a quantity of time periods into which the first duration is divided. In this case, it may be considered that the first quantity indicates the quantity of access moments included in the first duration, or it may be considered that the first quantity indicates the quantity of time periods into which the first duration is divided. For another example, if the end moment of the first duration is considered as included in the first duration, and the start moment of the first duration is considered as not included in the first duration, the quantity of access moments included in the first duration that is indicated by the first quantity may be equal to the quantity of time periods into which the first duration is divided. In this case, it may be considered that the first quantity indicates the quantity of access moments included in the first duration, or it may be considered that the first quantity indicates the quantity of time periods into which the first duration is divided. For another example, if both the start moment and the end moment of the first duration are considered as included in the first duration, the quantity of access moments included in the first duration that is indicated by the first quantity may be equal to the quantity of time periods into which the first duration is divided plus 1. For another example, if both the start moment and the end moment of the first duration are considered as not included in the first duration, the quantity of access moments included in the first duration that is indicated by the first quantity may be equal to the quantity of time periods into which the first duration is divided minus 1. Whether the quantity of access moments indicated by the first quantity includes the start moment and/or the end moment of the first duration may be predefined in a protocol, may be a default rule, may be indicated by the second apparatus, or may be pre-configured in the first apparatus and the second apparatus. Therefore, the first apparatus may determine the quantity of access moments in the first duration based on the first quantity.

There may be different implementations in which the first apparatus determines, based on the first indication information, the time for sending the random information.

In an optional implementation in which the first apparatus determines the time for sending the random information, the first apparatus may determine a moment A based on the first indication information. For example, the moment A is an access moment, and a first access moment may be determined based on the moment A. For example, the first indication information may be used to determine one or more moments, the moment A belongs to the one or more moments, and the one or more moments are, for example, a part or all of the access moments included in the first duration.

In an example, the first apparatus may determine a part or all of the access moments in the first duration based on the first indication information, and then select an access moment from the one or more access moments as the moment A. A selection manner is, for example, random selection, or the first apparatus may alternatively use another selection manner. For example, if the first indication information indicates the first duration and the first step size, the first duration is 10 milliseconds (ms), and the first step size is 2 ms, the first apparatus may determine, based on this, that access moments in the first duration include a 0^{th} ms, a 2^{nd} ms, a 4^{th} ms, a 6^{th} ms, and an 8^{th} ms, and these access moments may be considered as candidate access moments. The first apparatus may randomly select a moment from the candidate access moments as the moment A. For example, the first apparatus selects 2 ms from the candidate access moments.

In another example, although the first indication information may be used to determine one or more moments, the first apparatus does not actually determine all of the one or more moments, but determines only the moment A based on the first indication information. For example, the first apparatus obtains a random number based on the first indication information, and the random number indicates the moment A. For example, the first indication information indicates the first duration and the first step size, the first duration is 10 ms, and the first step size is 2 ms. The first apparatus randomly determines a 4^{th} ms based on the first duration and the first step size, and uses the 4^{th} ms as the moment A, without determining access moments such as a 0^{th} ms, a 2^{nd} ms, a 6^{th} ms, and an 8^{th} ms.

In another example, the first apparatus may determine a first random number based on the first indication information. An access moment corresponding to the first random number in the first duration is the moment A. For example, the first random number may indicate a sequence number of the moment A in the first duration. Optionally, the first apparatus may determine the first random number based on the first quantity. The first quantity is, for example, a parameter included or indicated by the first indication information. Alternatively, the first indication information does not indicate the first quantity, and the first apparatus may determine the first quantity based on content indicated by the first indication information. The first random number is, for example, represented as N. Optionally, N is an integer greater than 0 and less than or equal to the first quantity. Optionally, in embodiments of this application, a manner of determining the first random number may include: randomly selecting a random number that meets a value requirement of N as the first random number, randomly selecting a number from values that meet a value requirement of N as the first random number, or the like.

For example, the first indication information indicates the first duration and the first quantity, and the first apparatus determines the first random number N. For example, the first apparatus may determine the first random number N based on the first quantity. The first apparatus may use an N^{th} access moment in the first duration as the moment A. For example, the first duration is 10 ms, the first quantity is 5, and the first apparatus determines, based on the first quantity, that the first random number N is 3, that is, a 3^{rd} access moment in the first duration is the moment A. The access moments in the first duration indicated by the first indication information include a 0^{th} ms, a 2^{nd} ms, a 4^{th} ms, a 6^{th} ms, and an 8^{th} ms, and the 3^{rd} access moment is the 4^{th} ms, that is, the moment A in this case is the 4^{th} ms.

Alternatively, for another example, the first indication information indicates the first duration and the first step size, and the first apparatus may determine the first quantity based on the first duration and the first step size. For example, the first quantity is a value obtained by dividing the first duration by the first step size. Then, the first apparatus may determine a first random number N based on the first quantity. The first apparatus may use an N^{th} access moment in the first duration as the moment A. For example, the first duration is 10 ms, and the first step size is 2 ms. The first apparatus determines, based on the first duration and the first step size, that the first quantity is 10÷2=5, and the first apparatus determines, based on the first quantity, that the first random number N is 3. In other words, a 3^{rd} access moment in the first duration is used as the moment A. The access moments in the first duration indicated by the first indication information include a 0^{th} ms, a 2^{nd} ms, a 4^{th} ms, a 6^{th} ms, and an 8^{th} ms, and the 3^{rd} access moment is the 4^{th} ms, that is, the moment A is the 4^{th} ms.

Alternatively, for another example, the first indication information indicates the first step size and the first quantity, and the first apparatus determines a first random number N. For example, the first apparatus determines the first random number N based on the first quantity. The first apparatus may use an access moment corresponding to an N^{th} first step size as the moment A. For example, the first step size is 2 ms, and the first quantity is 5. The first apparatus determines, based on the first quantity, that the first random number N is 3. In other words, an access moment corresponding to a 3^{rd} first step size is used as the moment A, and the access moment corresponding to the 3^{rd} first step size is (3-1)×2 ms=4 ms, that is, the moment A is the 4^{th} ms.

In still another example, the first apparatus may determine a part or all of the access moments in the first duration and a first random number based on the first indication information. For a manner in which the first apparatus determines the first random number, refer to the foregoing descriptions. The first random number is, for example, represented as N. Optionally, N is an integer greater than 0 and less than or equal to the first quantity.

For example, the first indication information indicates the first duration and the first quantity. The first apparatus may determine a part or all of the access moments in the first duration based on the first duration and the first quantity. In addition, the first apparatus may further determine the first random number N based on the first quantity. The first apparatus may use an N^{th} access moment in the first duration as the moment A. For example, the first duration is 10 ms, and the first quantity is 5. The first apparatus determines, based on the first duration and the first quantity, that the access moments in the first duration include a 0^{th} ms, a 2^{nd} ms, a 4^{th} ms, a 6^{th} ms, and an 8^{th} ms. The first apparatus determines, based on the first quantity, that the first random number N is 3. In this case, a 3^{rd} access moment in the first duration indicated by the first indication information is the moment A, that is, the 4^{th} ms is the moment A.

Alternatively, for another example, the first indication information indicates the first duration and the first step size, and the first apparatus may determine a part or all of the access moments in the first duration based on the first duration and the first step size. In addition, the first apparatus may further determine the first quantity based on the first duration and the first step size. For example, the first quantity is a value obtained by dividing the first duration by the first step size. The first apparatus may further determine a first random number N based on the first quantity. The first apparatus may use an N^{th} access moment in the first duration as the moment A. For example, the first duration is 10 ms, and the first step size is 2 ms. The first apparatus determines, based on the first duration and the first step size, that the access moments in the first duration include a 0^{th} ms, a 2^{nd} ms, a 4^{th} ms, a 6^{th} ms, and an 8^{th} ms. The first apparatus further determines, based on the first duration and the first step size, that the first quantity is 10÷2=5. The first apparatus determines, based on the first quantity, that the first random number N is 3. In other words, a 3^{rd} access moment in the first duration is used as the moment A. The 3^{rd} access moment is the 4^{th} ms, that is, the moment A is the 4^{th} ms.

Alternatively, for another example, the first indication information indicates the first step size and the first quantity. The first apparatus may determine a part or all of the access moments in the first duration based on the first step size and the first quantity. The first apparatus may further determine a first random number N. For example, the first apparatus determines the first random number N based on the first quantity. The first apparatus may use an N^{th} access moment in the first duration as the moment A. For example, the first step size is 2 ms, and the first quantity is 5. The first apparatus determines, based on the first step size and the first quantity, that the access moments include a 0^{th} ms, a 2^{nd} ms, a 4^{th} ms, a 6^{th} ms, and an 8^{th} ms. The first apparatus determines, based on the first quantity, that the first random number N is 3. In other words, a 3^{rd} access moment is used as the moment A. The 3^{rd} access moment is the 4^{th} ms, that is, the moment A is the 4^{th} ms.

In another optional implementation in which the first apparatus determines the time for sending the random information, the first apparatus may determine a second duration based on the first indication information, and the second duration may be used to determine the time for sending the random information. For example, the second duration is a time interval between the first access moment and the first moment. In other words, the first access moment is a moment at which the second duration expires after the first moment. In other words, the first access moment is a moment at which an end moment of the second duration arrives after the first moment. The first moment is described below. For example, the first indication information may be used to determine one or more durations, and the second duration belongs to the one or more durations. A maximum duration in the one or more durations may be less than or equal to the first duration. Any one of the one or more durations may be an integer multiple of the first step size.

In an example, the first apparatus may determine one or more durations based on the first indication information, and then select one duration from the one or more durations as the second duration. A selection manner is, for example, random selection, or the first apparatus may use another selection manner. For example, the first indication information indicates the first duration and the first quantity (the first quantity is equal to a quantity of time periods into which the first duration is divided), the first duration is 10 ms, and the first quantity is 5. In this case, the first apparatus may determine several durations such as 0 ms, 2 ms, 4 ms, 6 ms, and 8 ms, and these durations may be considered as candidate durations. The first apparatus may randomly select a duration from the candidate durations as the second duration. For example, the first apparatus selects 2 ms from the candidate durations as the second duration.

In another example, although the first indication information may be used to determine one or more durations, the first apparatus does not actually determine all of the one or more durations, but determines only the second duration based on the first indication information. For example, the first apparatus obtains a random number based on the first indication information, and the random number indicates the second duration. For example, the first indication information indicates the first duration and the first quantity, the first duration is 10 ms, and the first quantity is 5. The first apparatus randomly determines 2 ms as the second duration based on the first duration and the first quantity, without determining durations such as 0 ms, 4 ms, 6 ms, and 8 ms.

In another example, the first apparatus may determine the first random number based on the first indication information, and the first random number may be used to determine the second duration. For a manner in which the first apparatus determines the first random number, refer to the foregoing descriptions. Optionally, N is an integer greater than 0 and less than or equal to the first quantity; or N is an integer greater than or equal to 0 and less than the first quantity.

For example, the first indication information indicates the first duration and the first quantity, and the first apparatus determines the first random number N. For example, the first apparatus may determine the first random number N based on the first quantity. The first apparatus may further determine the first step size based on the first duration and the first quantity. For example, the first step size is a value obtained by dividing the first duration by the first quantity. When N is an integer greater than 0 and less than or equal to the first quantity, the first apparatus may use (N-1)×first step size in the first duration as the second duration; or when N is an integer greater than or equal to 0 and less than the first quantity, the first apparatus may use N×first step size in the first duration as the second duration. For example, the first duration is 10 ms, the first quantity is 5, and the first apparatus determines, based on the first duration and the first quantity, that the first step size is 10÷5=2 ms. When N is an integer greater than 0 and less than or equal to the first quantity, the first apparatus determines, based on the first quantity, that the first random number N is 3, that is, the second duration is (3-1)×2=4 ms. One or more durations determined by the first apparatus based on the first duration and the first quantity include (10÷5)×(1-1)=0 ms, (10÷5)×(2-1)=2 ms, (10÷5)×(3-1)=4 ms, (10÷5)×(4-1)=6 ms, and (10÷5)×(5-1)=8 ms.

Alternatively, for another example, the first indication information indicates the first duration and the first step size, and the first apparatus may further determine the first quantity based on the first duration and the first step size. For example, the first quantity is a value obtained by dividing the first duration by the first step size. The first apparatus may determine a first random number N based on the first quantity. When N is an integer greater than 0 and less than or equal to the first quantity, the first apparatus may use (N-1)×first step size in the first duration as the second duration; or when N is an integer greater than or equal to 0 and less than the first quantity, the first apparatus uses N×first step size in the first duration as the second duration. For example, the first duration is 10 ms, the first step size is 2 ms, and the first apparatus determines, based on the first duration and the first step size, that the first quantity is 10÷2=5. When N is an integer greater than 0 and less than or equal to the first quantity, the first apparatus determines, based on the first quantity, that the first random number N is 3, that is, the second duration is (3-1)×2=4 ms. One or more durations determined by the first apparatus based on the first duration and the first step size include 2×(1-1)=0 ms, 2×(2-1)=2 ms, 2×(3-1)=4 ms, 2×(4-1)=6 ms, and 2×(5-1)=8 ms.

Alternatively, for another example, the first indication information indicates the first step size and the first quantity, and the first apparatus determines a first random number N. For example, the first apparatus determines the first random number N based on the first quantity. When N is an integer greater than 0 and less than or equal to the first quantity, the first apparatus may use an (N-1)^{th} first step size as the second duration; or when N is an integer greater than or equal to 0 and less than the first quantity, the first apparatus may use N×first step size in the first duration as the second duration. For example, the first step size is 2 ms, and the first quantity is 5. When N is an integer greater than 0 and less than or equal to the first quantity, the first apparatus determines, based on the first quantity, that the first random number N is 3, that is, the second duration is (3-1)×2=4 ms. One or more durations determined by the first apparatus based on the first step size and the first quantity include 2×(1-1)=0 ms, 2×(2-1)=2 ms, 2×(3-1)=4 ms, 2×(4-1)=6 ms, and 2×(5-1)=8 ms.

In another example, the first apparatus may determine one or more durations and a first random number based on the first indication information. For a manner in which the first apparatus determines the first random number, refer to the foregoing descriptions. The first random number is, for example, represented as N. Optionally, N is an integer greater than 0 and less than or equal to the first quantity; or N is an integer greater than or equal to 0 and less than the first quantity.

For example, the first indication information indicates the first duration and the first quantity, and the first apparatus may determine the first step size based on the first duration and the first quantity. For example, the first step size is a value obtained by dividing the first duration by the first quantity. The first apparatus may further determine one or more durations. For example, the one or more durations include first step size×(1-1) ms, first step size×(2-1) ms, ..., and first step size×(first quantity-1) ms. The first apparatus may further determine a first random number N. For example, the first apparatus determines the first random number N based on the first quantity. For example, N is an integer greater than 0 and less than or equal to the first quantity. The first apparatus may use an N^{th} duration in the one or more durations as the second duration. For example, the first duration is 10 ms, and the first quantity is 5. The first apparatus determines, based on the first duration and the first quantity, that the first step size is 10÷5=2 ms, and the one or more durations determined by the first apparatus include (10÷5)×(1-1)=0 ms, (10÷5)×(2-1)=2 ms, (10÷5)×(3-1)=4 ms, (10÷5)×(4-1)=6 ms, and (10÷5)×(5-1)=8 ms. The first apparatus determines, based on the first quantity, that the first random number N is 3, and the first apparatus may use the 3^{rd} duration as the second duration, that is, the second duration is 4 ms.

Alternatively, for another example, the first indication information indicates the first duration and the first step size, and the first apparatus may determine the first quantity based on the first duration and the first step size. For example, the first quantity is a value obtained by dividing the first duration by the first step size. The first apparatus may further determine one or more durations. For example, the one or more durations include first step size×(1-1) ms, first step size×(2-1) ms, ..., and first step size×(first quantity-1) ms. The first apparatus may further determine a first random number N. For example, the first apparatus determines the first random number N based on the first quantity. For example, N is an integer greater than 0 and less than or equal to the first quantity. The first apparatus may use an N^{th} duration in the one or more durations as the second duration. For example, the first duration is 10 ms, the first step size is 2 ms, and the first apparatus determines, based on the first duration and the first step size, that the first quantity is 10÷2=5. The one or more durations determined by the first apparatus include 2×(1-1)=0 ms, 2×(2-1)=2 ms, 2×(3-1)=4 ms, 2×(4-1)=6 ms, and 2×(5-1)=8 ms. The first apparatus determines, based on the first quantity, that the first random number N is 3, and the first apparatus uses the 3^{rd} duration as the second duration, that is, the second duration is 4 ms.

Alternatively, for another example, the first indication information indicates the first step size and the first quantity, and the first apparatus may determine one or more durations. For example, the one or more durations include first step size×(1-1) ms, first step size×(2-1) ms, ..., and first step size×(first quantity-1) ms. The first apparatus may further determine a first random number N. For example, the first apparatus determines the first random number N based on the first quantity. N is an integer greater than 0 and less than or equal to the first quantity. The first apparatus may use an N^{th} duration in the one or more durations as the second duration. For example, the first step size is 2 ms, and the first quantity is 5. The first apparatus may determine that the one or more durations include 2×(1-1)=0 ms, 2×(2-1)=2 ms, 2×(3-1)=4 ms, 2×(4-1)=6 ms, and 2×(5-1)=8 ms. The first apparatus determines, based on the first quantity, that the first random number N is 3, and the first apparatus uses the 3^{rd} duration as the second duration, that is, the second duration is 4 ms.

In the foregoing examples, an example in which the first indication information directly indicates a specific time is used. For example, the first indication information directly indicates that the first duration is 10 ms. Alternatively, the first indication information may implement indication in an indirect manner. Optionally, the first indication information may indicate an index, where one index may correspond to one set of parameters, and the set of parameters may include one or more of the first duration, the first step size, or the first quantity, so that corresponding parameters can be determined by using different indexes. The first indication information does not need to indicate a specific time, so that overhead of the first indication information can be reduced.

The foregoing describes the implementation of the first indication information. The following describes a manner in which the first apparatus obtains the first indication information.

Optionally, the first indication information may be information predefined in a protocol, and the first apparatus can obtain the first indication information based on the information predefined in the protocol.

Alternatively, optionally, the first apparatus may receive the first indication information. For example, the first indication information is included in a fourth message. The fourth message is, for example, from the second apparatus, or may be from an apparatus other than the first apparatus and the second apparatus.

For example, the fourth message indicates a first-type apparatus to perform access, indicates a first-type apparatus to perform a first service, or is used to page a first-type apparatus. For example, the fourth message is a paging message or a select message, or may be another message that can implement a similar function. In this case, the first indication information may correspond to the first-type apparatus, or may correspond to a current service (for example, the first service). Any first-type apparatus or an apparatus that performs the current service can use the first indication information. For example, the first indication information can be used regardless of whether one or more rounds of access processes are performed. The first service is, for example, an inventory service, or may be another service, for example, a read service or a write service.

Alternatively, the fourth message may indicate at least one apparatus to perform access, indicate at least one apparatus to perform random access, indicate information used to determine an initial value of the first counter, be used by at least one apparatus to obtain synchronization, be used to resolve contention on access of at least one apparatus, be used to start a next round of access process, or the like. The at least one apparatus may include the first apparatus, and optionally, may further include the third apparatus in FIG. 8. For example, the fourth message is a query message, or may be another message that can implement a similar function. In this case, the first indication information may correspond to a current round of access process (namely, the round of access process in which the first apparatus receives the first indication information), or may correspond to a current round of service process. For example, if a next round of access process needs to be performed after the current round of access process ends, the second apparatus may further send the first indication information. This manner can facilitate updating of the first indication information. For example, after a round of access process ends, some first-type apparatuses may have accessed the second apparatus. In this case, a quantity of to-be-accessed apparatuses is reduced. The second apparatus may evaluate the quantity of to-be-accessed apparatuses, so that a time indicated by the first indication information can be reduced (for example, the first duration is reduced) in a next round of access process, to reduce conflicts at a finer granularity and reduce access delay.

Alternatively, the fourth message may be used to decrement the first counter, is used to decrement the value of the first counter by 1, indicates a next apparatus to perform access, indicates a next access occasion, is used by at least one apparatus to obtain synchronization, is used to resolve contention on access of at least one apparatus, or the like. For example, the fourth message is a QueryRep message, or may be another message that can implement a similar function. In this case, the first indication information may correspond to a current access occasion (that is, the access occasion on which the first apparatus receives the first indication information). For example, if a next access occasion needs to be entered after the current access occasion ends, the second apparatus may further send the first indication information. This manner can facilitate updating of the first indication information. For example, after an access occasion ends, some first-type apparatuses may have accessed the second apparatus. In this case, a quantity of to-be-accessed apparatuses is reduced. The second apparatus may evaluate the quantity of to-be-accessed apparatuses, so that a time indicated by the first indication information can be reduced (for example, the first duration is reduced) on a next access occasion, to reduce conflicts at a finer granularity and reduce access delay.

Alternatively, the fourth message may be a broadcast message other than the foregoing types of messages, for example, a message dedicated to sending the first indication information. This is not limited in embodiments of this application.

Alternatively, the foregoing several messages may be combined. For example, the second apparatus may first indicate a first list by using a paging message, a select message, or a broadcast message other than the foregoing types of messages. The first list may include a correspondence between an index and a parameter, where one index may correspond to one set of parameters, and the set of parameters may include one or more of the first duration, the first step size, or the first quantity. For example, the first list may include one or more correspondences, where one of the correspondences is a correspondence between one index and one set of parameters. For example, the first list may include a correspondence between a first index and a set of parameters A, a correspondence between a second index and a set of parameters B, a correspondence between an M^{th} index and a set of parameters M, and the like, where M is a positive integer. In addition, the second apparatus may then send the first indication information by using a query message, a QueryRep message, or another message with a similar function. The first indication information may indicate an index in the first list. In this case, the first apparatus queries the first list, to determine a parameter indicated by the first indication information, so as to determine the time for sending the random information. For another example, the second apparatus may first indicate, by using a paging message, a select message, or a broadcast message other than the foregoing types of messages, partial information used to determine the time for sending the random information, and then send, by using a query message, a QueryRep message, or another message with a similar function, remaining information used to determine the time for sending the random information, so that the first apparatus can obtain the information used to determine the time for sending the random information. For example, the second apparatus may first indicate the first duration by using the paging message, and then indicate the first step size by using the query message. The first apparatus may determine, based on the paging message and the query message, the time for sending the random information.

Alternatively, a manner of predefinition in the protocol may be combined with a manner of indication by the second apparatus. For example, the partial information used to determine the time for sending the random information may be predefined in the protocol, and then the second apparatus sends, by using the first indication information, the remaining information used to determine the time for sending the random information, so that the first apparatus can obtain the information used to determine the time for sending the random information. For example, the first step size is predefined in the protocol, and the second apparatus indicates the first duration by using the first indication information. In this case, the first apparatus may determine, based on the information predefined in the protocol and the first indication information, the time for sending the random information. For another example, the foregoing first list may be predefined in the protocol, and then the second apparatus sends the first indication information. The first indication information may indicate an index in the first list. In this case, the first apparatus may determine, based on the first list predefined in the protocol and the first indication information, the time for sending the random information.

S802: The first apparatus sends the first random information at the first access moment. Correspondingly, the second apparatus receives the first random information at the first access moment.

The first access moment is a moment after the first moment, and the first access moment is determined by the first apparatus based on the first indication information. For a manner of determining the first access moment, refer to related descriptions in S801.

The first moment is a moment related to the value of the first counter becoming 0, and the first counter is a counter maintained by the first apparatus, and may be configured to determine a sending time of the first random information. For example, the second apparatus may send first information, and correspondingly, the first apparatus may receive the first information, as shown in S803 in FIG. 8. In FIG. 8, the third apparatus is further included. The third apparatus may also receive the first information. For example, the first information is broadcast. The first information may be used to determine the initial value of the first counter. For example, the first information includes a Q value, the Q value may be used to determine the initial value of the first counter, and the initial value may be greater than or equal to 0. For example, a manner in which the first apparatus determines the initial value based on the Q value is that the initial value may be any number in (0,2^{Q} - 1).

Optionally, the first moment may be the moment at which the value of the first counter becomes 0, or may be the moment at which the third message is received. The third message may be used to determine that the value of the first counter is 0. Alternatively, the first moment may be the moment at which the first apparatus generates the first random information after the value of the first counter becomes 0. For example, after receiving the third message, the first apparatus may set or decrement the value of the first counter. After the setting or decrement, the value of the first counter becomes 0. For example, the third message indicates at least one apparatus to perform access, indicates at least one apparatus to perform random access, indicates information used to determine the initial value of the first counter, is used by at least one apparatus to obtain synchronization, is used to resolve contention on access of at least one apparatus, or is used to start a next round of access process. For example, the third message is a query message. Alternatively, for example, the third message is used to decrement the first counter, is used to decrement the value of the first counter by 1, indicates a next apparatus to perform access, indicates a next access occasion, is used by at least one apparatus to obtain synchronization, or is used to resolve contention on access of at least one apparatus. For example, the third message is a QueryRep message. The at least one apparatus may include the first apparatus, and optionally, may further include the third apparatus in FIG. 8.

For example, if the initial value is 0, and the first moment is the moment at which the value of the first counter becomes 0, the moment at which the value of the first counter becomes the initial value may be the first moment. Alternatively, if the initial value is 0, and the first moment is the moment at which the third message is received, the first moment may be a moment at which the first apparatus receives the first information. In this case, the third message is, for example, a query message. Alternatively, if the initial value is 0, the first moment may alternatively be a moment at which the first apparatus generates the first random information based on the initial value of the first counter.

Alternatively, if the initial value is greater than 0, the first apparatus may sequentially decrement the value of the first counter. For example, the first apparatus may receive a second message from the second apparatus. Each time the first apparatus receives the second message, the first apparatus may decrement the value of the first counter by 1, until the value of the first counter becomes 0. For example, the second message is used to decrement the first counter, is used to decrement the value of the first counter by 1, indicates a next apparatus to perform access, indicates a next access occasion, is used by at least one apparatus to obtain synchronization, is used to resolve contention on access of at least one apparatus, or the like. For example, the second message is a QueryRep message. For a sending mechanism of the QueryRep message, refer to the foregoing descriptions. To be specific, in a round of access process, the second apparatus may send the QueryRep message on each access occasion starting from a 2^{nd} access occasion. For example, the second apparatus may send the QueryRep message at the beginning of each access occasion. If the first apparatus decrements the value of the first counter to 0 after receiving the QueryRep message on an access occasion, the first apparatus sends the random information on the access occasion. In this case, the first moment may be the moment at which the value of the first counter becomes 0, or may be a moment at which the first apparatus receives the QueryRep message that causes the value of the first counter to become 0. In this case, the QueryRep message is both the third message and the second message. Alternatively, the first moment may be a moment at which the first apparatus generates the first random information based on the value of the first counter becoming 0.

As described in S801, the first apparatus may determine the moment A or the second duration based on the first indication information. If the first apparatus determines the moment A, the moment A may be calculated starting from the first moment. For example, if the first moment is a moment T, and the moment A determined by the first apparatus is n, the first access moment may be an n^{th} moment after the moment T.

For example, the first indication information indicates that the first duration is 10 ms, it is predefined in the protocol that the first step size is 1 ms, and the moment A determined by the first apparatus based on the first indication information is a 1^{st} ms. In this case, the first access moment may be the 1^{st} ms after the first moment.

For another example, the first indication information indicates that the first duration is 10 ms, and that the first step size is 2 ms, and the moment A determined by the first apparatus based on the first indication information is a 2^{nd} ms. In this case, the first access moment may be the 2^{nd} ms after the first moment.

For another example, if the first indication information indicates that the first duration is 10 ms, and that the first quantity is 5 (the access moment corresponding to the first quantity does not include the start moment of the first duration), and the first random number determined by the first apparatus based on the first indication information is 2, the moment A is $\frac{10}{5} \times 2 = 4$ ms. In this case, the first access moment may be the 4^{th} ms after the first moment. Alternatively, if the first indication information indicates that the first duration is 10 ms, and that the first quantity is 5 (the access moment corresponding to the first quantity does not include the end moment of the first duration), and the first random number determined by the first apparatus based on the first indication information is 3, the moment A is $\frac{10}{5} \times \left(3-1\right) = 4$ ms. In this case, the first access moment may be the 4^{th} ms after the first moment.

Alternatively, if the first apparatus determines the second duration, the first access moment may be a moment at which the second duration ends starting from the first moment. For example, if the first moment is a moment T, and the duration determined by the first apparatus is n, the first access moment may be an end moment of the duration n after the moment T. For example, the first access moment is a moment T+n.

For example, the first indication information indicates that the first duration is 10 ms, it is predefined in the protocol that the first step size is 1 ms, and the second duration determined by the first apparatus based on the first indication information is 1 ms. In this case, the first access moment may be an end moment of 1 ms after the first moment.

For another example, the first indication information indicates that the first duration is 10 ms, and that the first step size is 2 ms, and the second duration determined by the first apparatus based on the first indication information is 2 ms. In this case, the first access moment may be an end moment of 2 ms after the first moment.

For another example, if the first indication information indicates that the first duration is 10 ms, and that the first quantity is 5 (the access moment corresponding to the first quantity does not include the start moment of the first duration), and the first random number determined by the first apparatus based on the first indication information is 2, the second duration is $\frac{10}{5} \times 2 = 4$ ms. In this case, the first access moment may be an end moment of 4 ms after the first moment. Alternatively, if the first indication information indicates that the first duration is 10 ms, and that the first quantity is 5 (the access moment corresponding to the first quantity does not include the end moment of the first duration), and the first random number determined by the first apparatus based on the first indication information is 3, the second duration is $\frac{10}{5} \times \left(3-1\right) = 4$ ms. In this case, the first access moment may be an end moment of 4 ms after the first moment.

As described in S801, the first indication information may be included in the fourth message, and the fourth message has different implementations. If the fourth message indicates a first-type apparatus to perform access, indicates a first-type apparatus to perform a first service, is used to page a first-type apparatus, or the like, for example, the fourth message is a paging message or a select message, optionally, after S801, this embodiment of this application may further include S803. For this, refer to Case 1 in FIG. 8. Alternatively, if the query message and the paging message (or the select message) are combined into one message, Case 1 may alternatively not include S803, and instead, the fourth message may further include the first information described in S803. In addition, optionally, in Case 1, this embodiment of this application may further include a step of sending the QueryRep message by the second apparatus. This is not shown in the figure.

Alternatively, the fourth message indicates at least one apparatus to perform access, indicates at least one apparatus to perform random access, indicates information used to determine the initial value of the first counter, is used by at least one apparatus to obtain synchronization, is used to resolve contention on access of at least one apparatus, is used to start a next round of access process, or the like. For example, the fourth message is a query message. The at least one apparatus may include the first apparatus, and optionally, may further include the third apparatus in FIG. 8. In this case, optionally, before S801, this embodiment of this application may further include S804. For this, refer to Case 2 in FIG. 8. In S804, the second apparatus sends a message A, and correspondingly, the first apparatus receives the message A. The message A may indicate a first-type apparatus to perform access, indicate a first-type apparatus to perform a first service, be used to page a first-type apparatus, or the like. For example, the message A is a paging message or a select message. In FIG. 8, the third apparatus is further included. The third apparatus may also receive the message A. For example, the message A is broadcast. Alternatively, if the query message and the paging message (or the select message) are combined into one message, this embodiment of this application may not include S804, and instead, the fourth message may further implement a function of the paging message or the select message. In addition, in Case 2, S801 and S803 may be a same step, and are represented by S801 in FIG. 8. For example, the fourth message includes not only the first indication information, but also the first information.

Alternatively, the fourth message is used to decrement the first counter, is used to decrement the value of the first counter by 1, indicates a next apparatus to perform access, indicates a next access occasion, is used by at least one apparatus to obtain synchronization, is used to resolve contention on access of at least one apparatus, or the like. For example, the fourth message is a QueryRep message. In this case, optionally, before S801, this embodiment of this application may further include S804 and/or S803. For this, refer to Case 3 in FIG. 8. For example, if the query message and the paging message (or the select message) are not combined, but are two messages, this embodiment of this application may include S803 and S804, where Case 3 in FIG. 8 is used as an example. Alternatively, if the query message and the paging message (or the select message) are combined into one message, Case 3 may include S803 and not include S804, where a message that the first information in S803 is in may further implement the function of the paging message or the select message. Alternatively, if the query message and the paging message (or the select message) are combined into one message, Case 3 may include S804 and not include S803, where the message A in S804 may further include the first information.

In embodiments of this application, for ease of description, a message that indicates at least one apparatus to perform access, indicates at least one apparatus to perform random access, indicates information used to determine an initial value of a counter (for example, the first counter), is used by at least one apparatus to obtain synchronization, is used to resolve contention on access of at least one apparatus, is used to start a next round of access process, or the like is described by using a query message as an example. However, the message may alternatively be another message that can implement a similar function. In other words, the query message in embodiments of this application may be replaced with a message that indicates at least one apparatus to perform access, indicates at least one apparatus to perform random access, indicates information used to determine the initial value of the first counter, is used by at least one apparatus to obtain synchronization, is used to resolve contention on access of at least one apparatus, is used to start a next round of access process, or the like.

In embodiments of this application, for ease of description, a message that indicates a first-type apparatus to perform access, indicates a first-type apparatus to perform a first service, is used to page a first-type apparatus, or the like is described by using a paging message or a select message as an example. However, the message may alternatively be another message that can implement a similar function. In other words, the paging message or the select message in embodiments of this application may be replaced with a message that indicates a first-type apparatus to perform access, indicates a first-type apparatus to perform a first service, is used to page a first-type apparatus, or the like.

In embodiments of this application, for ease of description, a message that is used to decrement a counter (for example, the first counter), is used to decrement a value of a counter (for example, the first counter) by 1, indicates a next apparatus to perform access, indicates a next access occasion, is used by at least one apparatus to obtain synchronization, is used to resolve contention on access of at least one apparatus, or the like is described by using a QueryRep message as an example. However, the message may alternatively be another message that can implement a similar function. In other words, the QueryRep message in embodiments of this application may be replaced with a message that is used to decrement a counter (for example, the first counter), is used to decrement a value of a counter (for example, the first counter) by 1, indicates a next apparatus to perform access, indicates a next access occasion, is used by at least one apparatus to obtain synchronization, is used to resolve contention on access of at least one apparatus, or the like.

The second apparatus may also determine the first access moment based on the first indication information. For example, the second apparatus may determine one or more moments or one or more durations based on the first indication information. In other words, the first apparatus may select only one moment or one duration based on the first indication information to send the random information, and the second apparatus may determine a plurality of moments or a plurality of durations.

For each moment of the one or more moments determined by the second apparatus, the second apparatus may determine, based on a sending time of a query message or a QueryRep message, an access moment corresponding to each moment, or the second apparatus may determine, based on a sending time of the query message or a QueryRep message, an access moment on a current access occasion and corresponding to each moment, to detect random information at each determined access moment. For example, in a 1^{st} access occasion, the second apparatus may determine, based on the sending time of the query message, the access moment corresponding to each moment; and in a subsequent access occasion, the second apparatus may determine, based on the sending time of the QueryRep message, the access moment corresponding to each moment. For example, if one moment determined by the second apparatus is 2 ms, an access moment corresponding to the moment may be a 2^{nd} ms after the second apparatus sends the query message or the QueryRep message, or an access moment on the current access occasion and corresponding to the moment may be a 2^{nd} ms after the second apparatus sends the query message or the QueryRep message. For another example, if the plurality of moments determined by the second apparatus are 2 ms, 4 ms, 6 ms, and 8 ms, access moments corresponding to these moments may be respectively a 2^{nd} ms, a 4^{th} ms, a 6^{th} ms, and an 8^{th} ms after the second apparatus sends the query message or the QueryRep message; or access moments on the current access occasion and corresponding to these moments may be a 2^{nd} ms, a 4^{th} ms, a 6^{th} ms, and an 8^{th} ms after the second apparatus sends the query message or the QueryRep message.

Alternatively, for each duration of the one or more durations determined by the second apparatus, the second apparatus may determine, based on a sending time of a query message or a QueryRep message, an access moment corresponding to each duration, or the second apparatus may determine, based on a sending time of a query message or QueryRep, an access moment on a current access occasion and corresponding to each duration, to detect random information at each determined access moment. For example, in a 1^{st} access occasion, the second apparatus may determine, based on the sending time of the query message, the access moment corresponding to each duration; and in a subsequent access occasion, the second apparatus may determine, based on the sending time of the QueryRep message, the access moment corresponding to each duration. For example, if one duration determined by the second apparatus is 2 ms, an access moment corresponding to the duration may be an end moment of 2 ms after the second apparatus sends the query message or the QueryRep message, or an access moment on the current access occasion and corresponding to the duration may be an end moment of 2 ms after the second apparatus sends the query message or the QueryRep message. For another example, if the plurality of durations determined by the second apparatus are 2 ms, 4 ms, 6 ms, and 8 ms, access moments corresponding to these durations may be respectively an end moment of 2 ms, an end moment of 4 ms, an end moment of 6 ms, and an end moment of 8 ms after the second apparatus sends the query message or the QueryRep message; or access moments on the current access occasion and corresponding to these durations may be respectively an end moment of 2 ms, an end moment of 4 ms, an end moment of 6 ms, and an end moment of 8 ms after the second apparatus sends the query message or the QueryRep message.

In the foregoing descriptions, an example in which the second apparatus determines the access moment based on the sending time of the query message or the QueryRep message is used. Alternatively, the second apparatus may determine the access moment based on a first time, where the first time is, for example, the sending time plus an end time of t. t may include a processing time, and the processing time may be a same feature as the processing time described above. In other words, the second apparatus may consider the processing time of the first apparatus, to detect random information at a more appropriate time, so as to reduce power consumption of the second apparatus.

In addition to the first apparatus and the second apparatus, FIG. 8 may further include the third apparatus. The third apparatus is, for example, also a first-type apparatus. A processing mechanism of the third apparatus is similar to that of the first apparatus, to describe how to reduce a collision probability in this embodiment of this application. There may be one or more third apparatuses, and one third apparatus is used as an example in FIG. 8. For example, the third apparatus may also send random information, for example, referred to as third random information. A time at which the third apparatus sends the third random information (for example, a second access moment) is determined based on the first indication information. A manner of determining the time by the third apparatus is similar to the manner of determining the first access moment by the first apparatus. Details are not described again. In addition, a counter maintained by the third apparatus is, for example, referred to as a third counter, and the third apparatus sends the third random information at the second access moment after a value of the third counter becomes 0. After this embodiment of this application is used, different apparatuses may meet a condition that the value of the first counter is 0 on a same access occasion. For example, different apparatuses may correspond to a same first moment. However, these apparatuses further determine first access moments based on the first indication information, and may determine the first access moments in a random manner. Therefore, there is a high probability that the first access moments determined by the different apparatuses are different. Therefore, different apparatuses can send random information at different access moments on an access occasion, thereby reducing a probability of collision of random information, improving transmission quality, and further improving a success rate of detecting random information by the second apparatus.

Optionally, this embodiment of this application may further include S805: The second apparatus sends a fifth message. Correspondingly, the first apparatus receives the fifth message. The fifth message is, for example, an ACK. Optionally, the fifth message may be a media access control (media access control, MAC) control element (control element, CE), or may be a message at another protocol layer. In addition, for example, the third apparatus may also receive the fifth message, and the fifth message may be broadcast. Optionally, the second apparatus may send the fifth message when or after the first duration expires after the second apparatus sends the query message or the QueryRep message. The first duration indicates the latest time for each apparatus to send the random information on the current access occasion. For example, after the time indicated by the first duration, each apparatus no longer sends the random information on the current access occasion. In this case, the second apparatus sends the fifth message, so that a probability of missing indication of random information can be reduced.

The fifth message may include random information received by the second apparatus on the current access occasion. For example, if the second apparatus receives the first random information, the fifth message may include the first random information. For another example, if the second apparatus receives the second random information, the fifth message may include the second random information. For the first apparatus, if the received fifth message includes the first random information, the first apparatus may determine that is successful; or if the received fifth message does not include the first random information, the first apparatus may determine that access has failed. If access of the first apparatus has failed, optionally, the first apparatus may continue to perform access on a next access occasion or in a next round of access process, or may stop access. A processing manner of the third apparatus is similar.

If the fifth message includes the first random information, optionally, after S805, the first apparatus may further send an identifier of the first apparatus to the second apparatus. In addition, data transmission and the like may be further performed between the first apparatus and the second apparatus. For example, refer to S205 to S206 in FIG. 2. Details are not described again.

In this embodiment of this application, when accessing a network, the first apparatus (for example, an AIoT apparatus) sends the first random information at the first access moment after the first moment, instead of at the first moment. The first moment is, for example, the moment related to the value of the first counter becoming 0. For example, the first apparatus waits for a period of time when the first moment arrives, and performs the transmission at the first access moment. The waiting time period is determined based on the first indication information. For example, waiting times determined by different apparatuses based on the first indication information are different. In this case, even if two apparatuses have a same first moment on an access occasion (or a time unit), because waiting times of the two apparatuses are different, sending moments of the two apparatuses on the access occasion may be separated, thereby reducing a probability of collision between the apparatuses on the access occasion, and improving transmission quality.

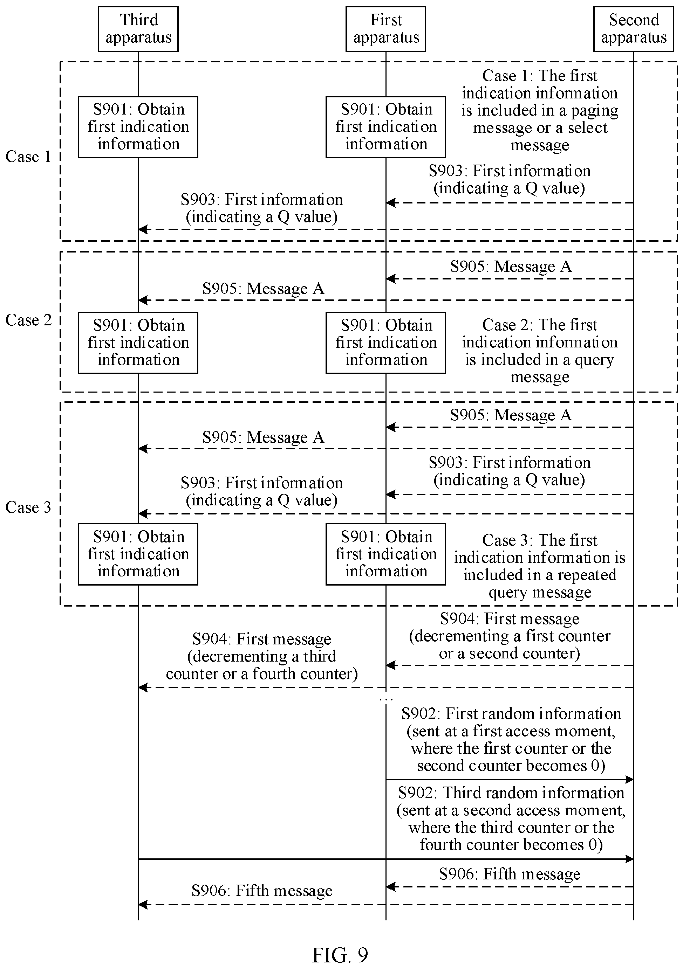

An embodiment of this application provides another communication method. FIG. 9 is a flowchart of the method.

S901: A first apparatus obtains first indication information.

The first apparatus may determine, based on the first indication information, a time for sending random information. Alternatively, in this embodiment of this application, a time at which the random information can be sent or the time for sending the random information may be referred to as an access moment, and the first apparatus may determine, based on the first indication information, the access moment for sending the random information. Optionally, the first indication information may indicate one or more of the following: a first duration, a first step size, or a first quantity. For more descriptions of the first indication information, refer to S801 in the embodiment shown in FIG. 8.

The first apparatus may determine, based on the first indication information, the time for sending the random information. For example, the first apparatus may determine a first value based on the first indication information, and the first value may be used to determine the time for sending the random information. The first value may be greater than or equal to 0. In addition, the first value may be less than or equal to the first duration, or the first value may be less than or equal to the first quantity.

In an implementation, the first indication information may be used to determine one or more values, and the first value belongs to the one or more values. For example, the first apparatus may determine one or more values based on the first indication information, and then select one value from the one or more values as the first value. A selection manner is, for example, random selection, or the first apparatus may use another selection manner. For example, if the first indication information indicates the first duration and the first step size, the first duration is 10 ms, and the first step size is 2 ms, the first apparatus may determine, based on this, 0 ms, 2 ms, 4 ms, 6 ms, and 8 ms, and these values may be considered as candidate values. The first apparatus may randomly select one of the candidate values as the first value. For example, the first apparatus selects 2 ms from the candidate values.

In another implementation, although the first indication information may be used to determine one or more values, the first apparatus does not actually determine all of the one or more values, but determines only the first value based on the first indication information. For example, the first apparatus obtains a random number based on the first indication information, and the random number indicates the first value.

For example, the first indication information indicates a first duration Y, and the first apparatus determines the first value based on the first duration. For example, the first apparatus determines a random number X based on the first duration, and uses the random number X as the first value, where a value range of X is that X is greater than or equal to 0, and X is less than or equal to Y. For example, the first indication information indicates that the first duration is 10. Optionally, a unit may be ms. The first apparatus determines, based on the first duration, that the range of the random number X is [0,10], [0,9], [1,10], or the like. For example, if the first apparatus randomly determines that the random number X is 9, the first value is 9.

Alternatively, the value range of X may be that X is greater than or equal to 0, and X is less than or equal to 2^{Y}-1. For example, the first indication information indicates that the first duration is 4. Optionally, a unit may be ms. The first apparatus determines, based on the first duration, that the range of the random number X is [0,15]. If the first apparatus randomly determines that the random number X is 14, the first value is 14.

For another example, the first indication information indicates a first quantity Y, and the first apparatus determines the first value based on the first quantity. For example, the first apparatus determines a random number X based on the first quantity, and uses the random number X as the first value. A value range of X is that X is greater than or equal to 0, and X is less than or equal to Y. For example, the first indication information indicates that the first quantity is 10, and the first apparatus determines, based on the first duration, that the range of the random number X is [0,10], [0,9], [1,10], or the like. If the first apparatus randomly determines that the random number X is 9, the first value is 9.

Alternatively, the value range of X may be that X is greater than or equal to 0, and X is less than or equal to 2^{Y}-1. For example, the first indication information indicates that the first quantity is 4. The first apparatus determines, based on the first quantity, that the range of the random number X is [0,15]. If the first apparatus randomly determines that the random number X is 14, the first value is 14.

For another example, the first indication information indicates the first duration and the first step size, the first duration is 10 ms, and the first step size is 2 ms. The first apparatus randomly determines 4 ms based on the first duration and the first step size, without determining values such as 0 ms, 2 ms, 6 ms, and 8 ms. In the foregoing examples, an example in which the first indication information directly indicates a specific value is used. For example, the first indication information directly indicates that the first duration is 10 ms. Alternatively, the first indication information may implement indication in an indirect manner. Optionally, the first indication information may indicate an index, where one index may correspond to one set of parameters, and the set of parameters may include one or more of the first duration, the first step size, or the first quantity, so that corresponding parameters can be determined by using different indexes. The first indication information does not need to indicate a specific time, so that overhead of the first indication information can be reduced.

For a manner in which the first apparatus obtains the first indication information, refer to S801 in the embodiment shown in FIG. 8.

S902: The first apparatus sends first random information at a first access moment. Correspondingly, a second apparatus receives the first random information at the first access moment.

The first access moment is a moment after a first moment, and the first access moment is determined by the first apparatus based on the first indication information. For related content such as a manner of determining the first access moment, the first moment (including S903 similar to S803), and the first information, refer to related descriptions of the embodiment shown in FIG. 8, for example, refer to steps S801 to S803 in the embodiment shown in FIG. 8.

In this embodiment of this application, the first apparatus may determine the first value based on the first indication information, and then determine the first access moment based on the first value. Optionally, the first apparatus may determine the first access moment directly based on the first value, or determine the first access moment based on the first value and a first message, where the first message is, for example, from the second apparatus. For example, if the first value is 0, the first apparatus may determine the first access moment based only on the first value. Alternatively, if the first value is greater than 0, the first apparatus may determine the first access moment based on the first value and the first message. Optionally, the first message may be used to decrement a value of a counter (for example, an updated first counter or second counter), be used to decrement a value of a counter (for example, an updated first counter or second counter) by 1, indicate a next apparatus to perform access, or the like. The following provides descriptions.

In this embodiment of this application, the first apparatus may maintain a first counter. For example, the first moment is a moment related to a value of the first counter becoming 0. When the value of the first counter becomes 0, the first apparatus does not immediately send the random information, but may re-assign a value to the first counter. For example, the first apparatus may set the first counter to the first value. In this case, the first counter may be referred to as the updated first counter. The first access moment may be equal to or later than a moment at which a value of the updated first counter becomes 0. In this manner, the first apparatus does not need to maintain too many counters. Implementation is simple.

For example, after the first apparatus updates the first counter, if the first value is 0, the first access moment may be equal to or later than the moment at which the value of the updated first counter becomes the first value.

Alternatively, after the first apparatus updates the first counter, if the first value is not 0 (for example, greater than 0), the first access moment may be equal to or later than the moment at which the value of the updated first counter becomes 0. Optionally, if the first value is not 0, the first apparatus may sequentially decrement the updated first counter, until the value of the updated first counter becomes 0. A manner in which the first apparatus decrements the updated first counter is, for example, decrementing the updated first counter based on the first message from the second apparatus. The second apparatus may send the first message one or more times on a current access occasion. For this, refer to S904. Each time the first apparatus receives the first message, the first apparatus decrements the value of the updated first counter by 1, until the value of the updated first counter becomes 0.

Optionally, the second apparatus may send the first message on each of a part or all access occasions in a round of access process, where a quantity of times or a quantity of first messages sent on each access occasion is the same or different. Optionally, a quantity of times of sending the first message on an access occasion, a sending frequency of the first message on an access occasion, or a length of a time subunit for sending the first message on an access occasion may be determined based on a quantity of to-be-accessed apparatuses and/or the first indication information, or may be determined based on another factor. For example, if the quantity of to-be-accessed apparatuses is large, the quantity of times of sending the first message may be large; or if a time indicated by the first indication information is long, the quantity of times of sending the first message may be large. Optionally, it may be considered that the second apparatus sends the first message once in one time subunit, that is, a time unit for sending the first message is a time subunit, and one time unit (or one access occasion) may include one or more time subunits. Therefore, the second apparatus may send the first message once or more times on one access occasion. For example, if the time unit is referred to as a slot, the time subunit may also be referred to as a sub-slot, or may have another name. This is not limited.

Optionally, the second apparatus may alternatively indirectly or implicitly indicate the first step size by using a sending time interval between two adjacent first messages. For example, the first indication information may indicate the first duration and/or the first quantity, but does not indicate the first step size. The first apparatus may determine the first duration and/or the first quantity based on the first indication information, and may further determine the first step size based on a receiving time interval between two adjacent first messages, so that the first apparatus can determine the time for sending the random information.

The first message may be used to decrement the value of the updated first counter, be used to decrement the value of the updated first counter by 1, indicate a next apparatus to perform access, or the like. A function of the first message may be similar to that of a QueryRep message. However, different from the QueryRep message, the QueryRep message and a query message are not configured on a same access occasion, but the first message and the query message may be configured on a same access occasion. In addition, the first message and the QueryRep message may also be configured on a same access occasion. For example, in a round of access process, the second apparatus may send the first message one or more times on each access occasion in the access process.

Alternatively, in this embodiment of this application, the first apparatus may maintain the first counter and a second counter, and an initial value of the second counter is determined, for example, based on the first indication information. Optionally, the first apparatus may simultaneously start the first counter and the second counter. For an initial value of the first counter, refer to related descriptions in the embodiment shown in FIG. 8. The initial value of the second counter is, for example, a sum of the initial value of the first counter and the first value. When the value of the first counter becomes 0, the first apparatus does not immediately send the random information, but sends the random information when or after a value of the second counter becomes 0. In other words, the first access moment may be equal to or later than a moment at which the value of the second counter becomes 0. Alternatively, the first apparatus may first start the first counter. For the initial value of the first counter, refer to related descriptions of the embodiment shown in FIG. 8. When the value of the first counter becomes 0, the first apparatus may set the first value for the second counter. The first apparatus sends the random information when or after the value of the second counter becomes 0. In other words, the first access moment may be equal to or later than the moment at which the value of the second counter becomes 0. In this manner, the first apparatus may separately maintain corresponding timing by using different counters, so that functions of the counters are clearer.

For example, the first apparatus sets the second counter to the first value when the value of the first counter is 0. If the first value is 0, the first access moment may be equal to or later than the moment at which the value of the second counter becomes the first value.

Alternatively, the first apparatus sets the second counter to the first value when the value of the first counter is 0. If the first value is not 0 (for example, greater than 0), the first access moment may be equal to or later than the moment at which the value of the second counter becomes 0. Optionally, if the first value is not 0, the first apparatus may sequentially decrement the second counter, until the value of the second counter becomes 0. A manner in which the first apparatus decrements the second counter is, for example, decrementing the second counter based on the first message from the second apparatus. For this, refer to the foregoing descriptions of decrementing the updated first counter by the first apparatus based on the first message.

Optionally, in embodiments of this application, that the first access moment is equal to a moment at which a value of a counter (for example, the updated first counter or second counter) becomes 0 may include: The first apparatus directly sends the first random information when the value of the counter is equal to 0.

Optionally, in embodiments of this application, that the first access moment is later than a moment at which a value of a counter (for example, the updated first counter or second counter) becomes 0 may include: When the value of the counter is equal to 0, the first apparatus may first generate the first random information, and then send the first random information.

As described in S901, the first indication information may be included in a fourth message, and the fourth message has different implementations. If the fourth message indicates a first-type apparatus to perform access, indicates a first-type apparatus to perform a first service, is used to page a first-type apparatus, or the like, for example, the fourth message is a paging message or a select message, optionally, after S901, this embodiment of this application may further include S903. For this, refer to Case 1 in FIG. 9. Alternatively, if the query message and the paging message (or the select message) are combined into one message, Case 1 may not include S903, and instead, the fourth message may further include the first information described in S903. In addition, optionally, in Case 1, a step of sending the QueryRep message by the second apparatus may be further included. This is not shown in the figure.

Alternatively, the fourth message indicates at least one apparatus to perform access, indicates at least one apparatus to perform random access, indicates information used to determine the initial value of the first counter, is used by at least one apparatus to obtain synchronization, is used to resolve contention on access of at least one apparatus, is used to start a next round of access process, or the like. For example, the fourth message is a query message. The at least one apparatus may include the first apparatus, and optionally, may further include a third apparatus in FIG. 9. In this case, optionally, before S901, this embodiment of this application may further include S905. For this, refer to Case 2 in FIG. 9. In S905, the second apparatus sends a message A, and correspondingly, the first apparatus receives the message A. The message A may indicate a first-type apparatus to perform access, indicate a first-type apparatus to perform a first service, be used to page a first-type apparatus, or the like. For example, the message A is a paging message or a select message. In FIG. 9, the third apparatus is further included. The third apparatus may also receive the message A. For example, the message A is broadcast. Alternatively, if the query message and the paging message (or the select message) are combined into one message, this embodiment of this application may not include S905, and instead, the fourth message may further implement a function of the paging message or the select message. In addition, in Case 2, S901 and S905 may be a same step, and are represented by S901 in the figure. For example, the fourth message includes not only the first indication information, but also the first information.

Alternatively, the fourth message is used to decrement the first counter, is used to decrement the value of the first counter by 1, indicates a next apparatus to perform access, indicates a next access occasion, is used by at least one apparatus to obtain synchronization, is used to resolve contention on access of at least one apparatus, or the like. For example, the fourth message is a QueryRep message. In this case, optionally, before S901, this embodiment of this application may further include S905 and/or S903. For this, refer to Case 3 in FIG. 9. For example, if the query message and the paging message (or the select message) are not combined, but are two messages, Case 3 may include S903 and S905. This is used as an example in FIG. 9. Alternatively, if the query message and the paging message (or the select message) are combined into one message, Case 3 may include S903 and not include S905, where a message that the first information in S903 is in may further implement the function of the paging message or the select message. Alternatively, if the query message and the paging message (or the select message) are combined into one message, Case 3 may include S905 and not include S903, where the message A in S905 may further include the first information.

The second apparatus may also determine the first access moment based on the first indication information. For example, the second apparatus may determine one or more values based on the first indication information. In other words, the first apparatus may select only one value only based on the first indication information, and the second apparatus may determine a plurality of moments or a plurality of values.

For each value of the one or more values determined by the second apparatus, the second apparatus may determine, based on a sending time of a query message or a QueryRep message, an access moment corresponding to each value, or the second apparatus may determine, based on a sending time of the query message or a QueryRep message, an access moment on a current access occasion and corresponding to each value, to detect random information at each determined access moment. For example, in a 1^{st} access occasion, the second apparatus may determine, based on the sending time of the query message, the access moment corresponding to each value; and in a subsequent access occasion, the second apparatus may determine, based on the sending time of the QueryRep message, the access moment corresponding to each value. For example, if a value determined by the second apparatus is 2, an access moment corresponding to the value may be an end moment of a 2^{nd} time subunit after the sending time of the query message or the QueryRep message.

In the foregoing descriptions, an example in which the second apparatus determines the access moment based on the sending time of the query message or the QueryRep message is used. Alternatively, the second apparatus may determine the access moment based on a first time, where the first time is, for example, the sending time plus an end time of t. For this, refer to related descriptions of the embodiment shown in FIG. 8.

In addition to the first apparatus and the second apparatus, FIG. 9 may further include the third apparatus. The third apparatus is, for example, also a first-type apparatus. A processing mechanism of the third apparatus is similar to that of the first apparatus, to describe how to reduce a collision probability in this embodiment of this application. There may be one or more third apparatuses, and one third apparatus is used as an example in FIG. 9. For example, the third apparatus may also send random information, for example, referred to as third random information. A time at which the third apparatus sends the third random information (for example, a second access moment) is determined based on the first indication information. A manner of determining the time by the third apparatus is similar to the manner of determining the first access moment by the first apparatus. Details are not described again. For example, the third apparatus maintains a third counter, re-assigns a value to the third counter when the third counter is 0, and until an updated third counter becomes 0, sends third random information, where the value re-assigned to the third counter is determined based on the first indication information. Alternatively, the third apparatus maintains a third counter and a fourth counter, and sends third random information when the fourth counter is 0, where an initial value of the fourth counter is determined based on the first indication information. After this embodiment of this application is used, different apparatuses may meet a condition that the value of the first counter is 0 on a same access occasion. For example, different apparatuses may correspond to a same first moment. However, these apparatuses further determine first values based on the first indication information, and may determine the first values in a random manner. Therefore, there is a high probability that the first values determined by the different apparatuses are different. Therefore, different apparatuses can send random information at different access moments on an access occasion, thereby reducing a probability of collision of random information, improving transmission quality, and further improving a success rate of detecting random information by the second apparatus.

Optionally, this embodiment of this application may further include S906: The second apparatus sends a fifth message. Correspondingly, the first apparatus receives the fifth message. For more descriptions of this, refer to S805 in the embodiment shown in FIG. 8.

In this embodiment of this application, when accessing a network, the first apparatus (for example, an AIoT apparatus) sends the first random information at the first access moment after the first moment, instead of at the first moment. The first moment is, for example, the moment related to the value of the first counter becoming 0. For example, the first apparatus waits for a period of time when the first moment arrives, and performs the transmission at the first access moment. The waiting time period is determined based on the first indication information. For example, waiting times determined by different apparatuses based on the first indication information are different. In this case, even if two apparatuses have a same first moment on an access occasion (or a time unit), because waiting times of the two apparatuses are different, sending moments of the two apparatuses on the access occasion may be separated, thereby reducing a probability of collision between the apparatuses on the access occasion, and improving transmission quality. In addition, in this embodiment of this application, the first apparatus may decrement the counter or implement timing based on a message from a second apparatus. Therefore, even if a capability of the first apparatus is weak (for example, some apparatuses may not be able to implement a timing function), the first apparatus can still perform the technical solutions in this embodiment of this application, thereby expanding an application scope of this embodiment of this application.

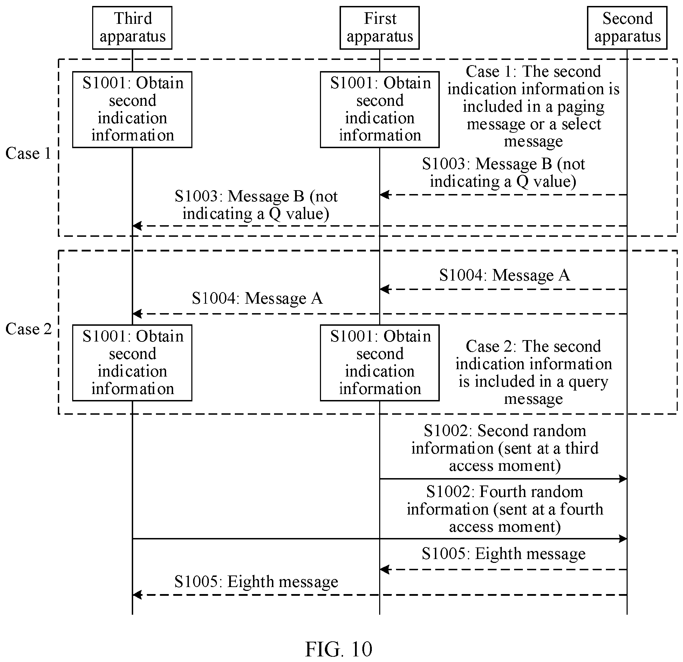

An embodiment of this application provides still another communication method. FIG. 10 is a flowchart of the method. Different from the foregoing embodiments, an AIoT apparatus in this embodiment of this application may not need to maintain a counter.

S1001: A first apparatus obtains second indication information.

The first apparatus may determine, based on the second indication information, a time for sending random information. Alternatively, in this embodiment of this application, a time at which the random information can be sent or the time for sending the random information may be referred to as an access moment, and the first apparatus may determine, based on the second indication information, the access moment for sending the random information. Optionally, the second indication information may indicate one or more of the following: a third duration, a second step size, or a second quantity.

The third duration may indicate a latest time for sending the random information on an access occasion. The second step size is a time interval between two access moments in the third duration. The third quantity may indicate a quantity of access moments included in the third duration. For more related content of the second indication information, refer to the descriptions of the first indication information in S801 in the embodiment shown in FIG. 8. The two pieces of indication information are similar.

In addition, for more content of S1001, for example, how the first apparatus determines, based on the second indication information, the time for sending the random information (for example, a third access moment), or how the first apparatus obtains the second indication information, refer to S801 in the embodiment shown in FIG. 8. For example, refer to how the first apparatus determines, based on the first indication information, the time for sending the random information in S801, and refer to how the first apparatus obtains the first indication information in S801.

S1002: The first apparatus sends second random information at the third access moment. Correspondingly, a second apparatus receives the second random information at the third access moment.

The third access moment is a moment after a second moment, and the third access moment is determined by the first apparatus based on the second indication information. For a manner of determining the third access moment, refer to related descriptions in S1001.

The second moment is, for example, a moment at which the first apparatus receives the second indication information. In other words, the first apparatus in this embodiment of this application may not maintain a counter used to determine a sending time of the random information. Therefore, the third access moment may be calculated starting from a receiving moment of the second indication information, so that implementation of the first apparatus can be simplified.

As described in S1001, the first apparatus may determine a moment A or a second duration based on the second indication information. If the first apparatus determines the moment A, the third access moment may be calculated starting from the second moment. For example, if the second moment is a moment T, and the moment A determined by the first apparatus is n, the third access moment may be an n^{th} moment after the moment T.

For example, the second indication information indicates that the third duration is 10 ms, it is predefined in a protocol that the second step size is 1 ms, and the moment determined by the first apparatus based on the second indication information is 1 ms. In this case, the third access moment may be the 1^{st} ms after the second moment.

For another example, the second indication information indicates that the third duration is 10 ms, and that the second step size is 2 ms, and the moment A determined by the first apparatus based on the second indication information is a 2^{nd} ms. In this case, the third access moment may be the 2^{nd} ms after the second moment.

For another example, if the second indication information indicates that the third duration is 10 ms, and that the second quantity is 5 (an access moment corresponding to the second quantity does not include a start moment of the third duration), and a first random number determined by the first apparatus based on the second indication information is 2, the moment A is $\frac{10}{5} \times 2 = 4 ms$. In this case, the third access moment may be the 4^{th} ms after the second moment. Alternatively, if the second indication information indicates that the third duration is 10 ms, and that the second quantity is 5 (an access moment corresponding to the second quantity does not include an end moment of the third duration), and a first random number determined by the first apparatus based on the second indication information is 3, the moment A is $\frac{10}{5} \times \left(3-1\right) = 4 ms$ In this case, the third access moment may be the 4^{th} ms after the second moment.

Alternatively, if the first apparatus determines the second duration, the third access moment may be a moment at which the second duration ends starting from the second moment. For example, if the second moment is a moment T, and the duration determined by the first apparatus is n, the third access moment may be an end moment of the duration n after the moment T. For example, the third access moment is a moment T+n.

For example, the second indication information indicates that the third duration is 10 ms, it is predefined in a protocol that the second step size is 1 ms, and the second duration determined by the first apparatus based on the second indication information is 1 ms. In this case, the third access moment may be an end moment of 1 ms after the second moment.

For another example, the second indication information indicates that the third duration is 10 ms, and that the second step size is 2 ms, and the second duration determined by the first apparatus based on the second indication information is 2 ms. In this case, the third access moment may be an end moment of 2 ms after the second moment.

For another example, if the second indication information indicates that the third duration is 10 ms, and that the second quantity is 5 (an access moment corresponding to the second quantity does not include a start moment of the third duration), and a first random number determined by the first apparatus based on the second indication information is 2, the second duration is $\frac{10}{5} \times 2 = 4 ms$. In this case, the third access moment may be an end moment of 4 ms after the second moment. Alternatively, if the second indication information indicates that the third duration is 10 ms, and that the second quantity is 5 (an access moment corresponding to the second quantity does not include an end moment of the third duration), and a first random number determined by the first apparatus based on the second indication information is 3, the second duration is $\frac{10}{5} \times \left(3-1\right) = 4 ms$. In this case, the third access moment may be an end moment of 4 ms after the second moment.

Optionally, the second indication information may be information predefined in the protocol, and the first apparatus can obtain the second indication information based on the information predefined in the protocol.

Alternatively, optionally, the first apparatus may receive the second indication information. For example, the second indication information is included in a seventh message, and the seventh message is, for example, from the second apparatus, or may be from another apparatus.

For example, the seventh message indicates a first-type apparatus to perform access, indicates a first-type apparatus to perform a first service, or is used to page a first-type apparatus. For example, the seventh message is a paging message or a select message. In this case, the second moment may be a moment at which the first apparatus receives the paging message or the select message; or the seventh message may be another message that can implement a similar function. In this case, the second indication information may correspond to the first-type apparatus, or may correspond to a current service (for example, the first service). Any first-type apparatus or an apparatus that performs the current service can use the second indication information. For example, the second indication information can be used regardless of whether one or more rounds of access processes are performed. The first service is, for example, an inventory service, or may be another service.

Alternatively, the seventh message may indicate at least one apparatus to perform access, indicate at least one apparatus to perform random access, be used by at least one apparatus to obtain synchronization, be used to resolve contention on access of at least one apparatus, or the like. The at least one apparatus may include the first apparatus, and optionally, may further include a third apparatus in FIG. 9. For example, the seventh message is a query message. In this case, the second moment may be a moment at which the first apparatus receives the query message; or the seventh message may be another message that can implement a similar function. In this case, the second indication information may correspond to a current round of access process (namely, a round of access process in which the first apparatus receives the second indication information), or may correspond to a current round of service process. For example, if a next round of access process needs to be performed after the current round of access process ends, the second apparatus may further send the second indication information. This manner can facilitate updating of the second indication information. For example, after a round of access process ends, some first-type apparatuses may have accessed the second apparatus. In this case, a quantity of to-be-accessed apparatuses is reduced. The second apparatus may evaluate the quantity of to-be-accessed apparatuses, so that a time indicated by the second indication information can be reduced (for example, the third duration is reduced) in a next round of access process, to reduce conflicts at a finer granularity and reduce access delay.

Alternatively, the seventh message may be a broadcast message other than the foregoing types of messages, for example, a message dedicated to sending the second indication information. This is not limited in embodiments of this application.

Alternatively, the foregoing several messages may be combined. For example, the second apparatus may first indicate a second list by using a paging message, a select message, or another broadcast message other than the foregoing types of messages. The second list may include a correspondence between an index and a parameter, where one index may correspond to one set of parameters, and the set of parameters may include one or more of the third duration, the second step size, or the second quantity. For example, a first list may include one or more correspondences, where one of the correspondences is a correspondence between one index and one set of parameters. For example, the first list may include a correspondence between a first index and a set of parameters A, a correspondence between a second index and a set of parameters B, a correspondence between an M^{th} index and a set of parameters M, and the like, where M is a positive integer. In addition, the second apparatus may then send the second indication information by using a query message or another message with a similar function. The second indication information may indicate an index in the second list. In this case, the first apparatus queries the second list, to determine a parameter indicated by the second indication information, so as to determine the time for sending the random information. For another example, the second apparatus may first indicate, by using a paging message, a select message, or a broadcast message other than the foregoing types of messages, partial information used to determine the time for sending the random information, and then send, by using a query message, a QueryRep message, or another message with a similar function, remaining information used to determine the time for sending the random information, so that the first apparatus can obtain the information used to determine the time for sending the random information. For example, the second apparatus may first indicate the third duration by using the paging message, and then indicate the second step size by using the query message. The first apparatus may determine, based on the paging message and the query message, the time for sending the random information.

Alternatively, a manner of predefinition in the protocol may be combined with a manner of indication by the second apparatus. For example, the partial information used to determine the time for sending the random information may be predefined in the protocol, and then the second apparatus sends, by using the second indication information, the remaining information used to determine the time for sending the random information, so that the first apparatus can obtain the information used to determine the time for sending the random information. For example, the second step size is predefined in the protocol, and the second apparatus indicates the third duration by using the second indication information. In this case, the first apparatus may determine, based on the information predefined in the protocol and the second indication information, the time for sending the random information. For another example, the foregoing second list may be predefined in the protocol, and then the second apparatus sends the second indication information. The second indication information may indicate an index in the second list. In this case, the first apparatus may determine, based on the second list predefined in the protocol and the second indication information, the time for sending the random information.

Optionally, if the seventh message indicates a first-type apparatus to perform access, indicates a first-type apparatus to perform a first service, is used to page a first-type apparatus, or the like, for example, the seventh message is a paging message or a select message, optionally, after S1001, this embodiment of this application may further include S1003. In S1003, the second apparatus sends a message B, and correspondingly, the first apparatus receives the message B. The message B is, for example, a broadcast message, and the third apparatus in FIG. 10 may also receive the message B. The message B may indicate at least one apparatus to perform access, indicate at least one apparatus to perform random access, or the like. For example, the message B is a query message. Because a counter is canceled in this embodiment of this application, the message B in this embodiment of this application may not include the first information in the embodiment shown in FIG. 8. Alternatively, the message B and the seventh message (or the select message) are combined into one message. In this case, this embodiment of this application may not include S1003, and instead, the seventh message may further implement a function of the message B.

Alternatively, the seventh message indicates at least one apparatus to perform access, indicate at least one apparatus to perform random access, is used by at least one apparatus to obtain synchronization, is used to resolve contention on access of at least one apparatus, or the like. For example, the seventh message is a query message. Because a counter is canceled in this embodiment of this application, the seventh message may not include the first information in the embodiment shown in FIG. 8. The at least one apparatus may include the first apparatus, and optionally, may further include the third apparatus in FIG. 10. Optionally, before S1001, this embodiment of this application may further include S1004: The second apparatus sends a message A, and correspondingly, the first apparatus receives the message A. The message A may indicate a first-type apparatus to perform access, indicate a first-type apparatus to perform a first service, be used to page a first-type apparatus, or the like. For example, the message A is a paging message or a select message. In FIG. 10, the third apparatus is further included. The third apparatus may also receive the message A. For example, the message A is broadcast. Alternatively, the seventh message and the message A are combined into one message. In this case, this embodiment of this application may not include S1004, and instead, the seventh message may further implement a function of the paging message or the select message. In addition, in this case, S1001 and S1003 may be a same step, and are represented by S1001 in the figure. For example, the seventh message not only includes the first indication information, but also can implement a function of the message A.

The second apparatus may also determine the third access moment based on the second indication information. For example, the second apparatus may determine one or more moments or one or more durations based on the second indication information. In other words, the first apparatus may select only one moment or one duration based on the second indication information to send the random information, and the second apparatus may determine a plurality of moments or a plurality of durations.

For each moment of the one or more moments determined by the second apparatus, the second apparatus may determine, based on a sending time of the second indication information, an access moment corresponding to each moment, to detect random information at each determined access moment. For example, if one moment determined by the second apparatus is a 2^{nd} ms, an access moment corresponding to the moment may be the 2^{nd} ms after the second apparatus sends the second indication information. For another example, if the plurality of moments determined by the second apparatus are respectively a 2^{nd} ms, a 4^{th} ms, a 6^{th} ms, and an 8^{th} ms, access moments corresponding to these moments may be respectively the 2^{nd} ms, the 4^{th} ms, the 6^{th} ms, and the 8^{th} ms after the second apparatus sends the second indication information.

Alternatively, for each duration of the one or more durations determined by the second apparatus, the second apparatus may determine, based on a sending time of the second indication information, an access moment corresponding to each duration, to detect random information at each determined access moment. For example, if one duration determined by the second apparatus is 2 ms, an access moment corresponding to the duration may be an end moment of 2 ms after the second apparatus sends the second indication information. For another example, if the plurality of durations determined by the second apparatus are 2 ms, 4 ms, 6 ms, and 8 ms, access moments corresponding to these durations may be an end moment of 2 ms, an end moment of 4 ms, an end moment of 6 ms, and an end moment of 8 ms after the second apparatus sends the second indication information.

In addition to the first apparatus and the second apparatus, FIG. 10 may further include the third apparatus. The third apparatus is, for example, also a first-type apparatus. A processing mechanism of the third apparatus is similar to that of the first apparatus, to describe how to reduce a collision probability in this embodiment of this application. There may be one or more third apparatuses, and one third apparatus is used as an example in FIG. 10. For example, the third apparatus may also send random information, for example, referred to as fourth random information. A time at which the third apparatus sends the fourth random information (for example, a fourth access moment) is determined based on the second indication information. A manner of determining the time by the third apparatus is similar to the manner of determining the third access moment by the first apparatus. Details are not described again. After this embodiment of this application is used, different apparatuses may correspond to a same second moment. However, these apparatuses further determine third access moments based on the second indication information, and may determine the third access moments in a random manner. Therefore, there is a high probability that the third access moments determined by the different apparatuses are different. Therefore, different apparatuses can send random information at different access moments on an access occasion, thereby reducing a probability of collision of random information, improving transmission quality, and further improving a success rate of detecting random information by the second apparatus.

Optionally, this embodiment of this application may further include S1005: The second apparatus sends an eighth message. Correspondingly, the first apparatus receives the eighth message. For more descriptions of this, refer to the descriptions of the fifth message in S805 in the embodiment shown in FIG. 8.

In this embodiment of this application, when accessing a network, the first apparatus (for example, an AIoT apparatus) sends first random information at the third access moment after the second moment, instead of at the second moment. For example, the first apparatus waits for a period of time when the second moment arrives, and then performs the transmission at the third access moment. The waiting time period is determined based on the second indication information. For example, waiting times determined by different apparatuses based on the second indication information are different. In this case, even if two apparatuses have a same second moment on an access occasion (or a time unit), because waiting times of the two apparatuses are different, sending moments of the two apparatuses on the access occasion may be separated, thereby reducing a probability of collision between the apparatuses on the access occasion, and improving transmission quality. In addition, the first apparatus in this embodiment of this application does not need to maintain a counter. This helps simplify implementation of the first apparatus. In addition, because the first apparatus does not need to maintain a counter, a second apparatus does not need to send a QueryRep message, thereby reducing signaling overhead.

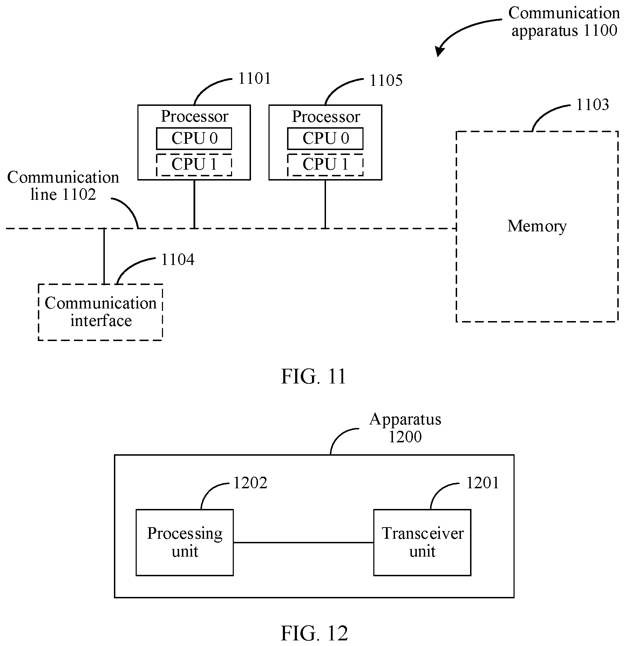

FIG. 11 is a diagram of a structure of a communication apparatus according to an embodiment of this application. The communication apparatus 1100 may be the first apparatus in the embodiment shown in any one of FIG. 8 to FIG. 10, and is configured to implement the methods corresponding to the first apparatus in the foregoing method embodiments. The first apparatus is, for example, an independent device, or a functional module or a circuit system disposed in another device. Alternatively, the communication apparatus 1100 may be the second apparatus in the embodiment shown in any one of FIG. 8 to FIG. 10, and is configured to implement the methods corresponding to the second apparatus in the foregoing method embodiments. The second apparatus is, for example, an independent device, or a functional module or a circuit system disposed in another device. For example, a type of circuit system is a chip system.

The communication apparatus 1100 includes at least one processor 1101. The processor 1101 may be configured to perform internal processing of the apparatus, to implement a specific control processing function. Optionally, the processor 1101 includes instructions. Optionally, the processor 1101 may store data. Optionally, different processors may be independent components, may be located at different physical locations, or may be located on different integrated circuits. Optionally, different processors may be integrated into one or more processors, for example, integrated into one or more integrated circuits.

Optionally, the communication apparatus 1100 includes one or more memories 1103, configured to store instructions. Optionally, the memory 1103 may further store data. The processor and the memory may be separately disposed, or may be integrated together.

Optionally, the communication apparatus 1100 includes a communication line 1102 and at least one communication interface 1104. The memory 1103, the communication line 1102, and the communication interface 1104 are all optional, and therefore are all represented by dashed lines in FIG. 11.

Optionally, the communication apparatus 1100 may further include a transceiver and/or an antenna. The transceiver may be configured to send information to another apparatus or receive information from another apparatus. The transceiver may be referred to as a transceiver machine, a transceiver circuit, an input/output interface, or the like, and is configured to implement a transceiver function of the communication apparatus 1100 by using an antenna. Optionally, the transceiver includes a transmitter (transmitter) and a receiver (receiver). For example, the transmitter may be configured to generate a radio frequency (radio frequency) signal based on a baseband signal, and the receiver may be configured to convert the radio frequency signal into the baseband signal.

The processor 1101 may include a general-purpose central processing unit (central processing unit, CPU), a microprocessor, an application-specific integrated circuit (application-specific integrated circuit, ASIC), or one or more integrated circuits configured to control program execution in the solutions of this application.

The communication line 1102 may include a path for transmission of information between the foregoing components.

The communication interface 1104 may be any apparatus like a transceiver, and is configured to communicate with another device or a communication network, such as Ethernet, a radio access network (radio access network, RAN), a wireless local area network (wireless local area network, WLAN), or a wired access network.

The memory 1103 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disc storage, an optical disc storage (including a compact optical disc, a laser disc, an optical disc, a digital versatile optical disc, a blue optical disc, and the like), a magnetic disk storage medium or another magnetic storage device, or any other medium that can carry or store expected program code in a form of instructions or a data structure and can be accessed by a computer, but is not limited thereto. The memory 1103 may exist alone, and is connected to the processor 1101 through the communication line 1102. Alternatively, the memory 1103 may be integrated with the processor 1101.

The memory 1103 is configured to store computer-executable instructions for executing the solutions of this application, and the processor 1101 controls the execution. The processor 1101 is configured to execute the computer-executable instructions stored in the memory 1103, to implement the steps performed by the first apparatus in the embodiment shown in any one of FIG. 8 to FIG. 10, and/or the steps performed by the second apparatus in the embodiment shown in any one of FIG. 8 to FIG. 10.

Optionally, the computer-executable instructions in this embodiment of this application may also be referred to as application program code. This is not specifically limited in this embodiment of this application.

During specific implementation, in an embodiment, the processor 1101 may include one or more CPUs, such as a CPU 0 and a CPU 1 in FIG. 11.

During specific implementation, in an embodiment, the communication apparatus 1100 may include a plurality of processors such as the processor 1101 and a processor 1105 in FIG. 11. Each of the processors may be a single-core (single-CPU) processor, or may be a multi-core (multi-CPU) processor. The processor herein may be one or more devices, circuits, and/or processing cores configured to process data (for example, computer program instructions).

When the apparatus shown in FIG. 11 is a chip, for example, the first apparatus is a chip or the second apparatus is a chip, the chip includes the processor 1101 (and may further include the processor 1105), the communication line 1102, and the communication interface 1104, and optionally, may further include the memory 1103. Specifically, the communication interface 1104 may be an input interface, a pin, a circuit, or the like. The memory 1103 may be a register, a buffer, or the like. The processor 1101 and the processor 1105 may be a general-purpose CPU, a microprocessor, an ASIC, or one or more integrated circuits configured to control program execution of the communication method in any one of the foregoing embodiments.

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. For example, when division into functional modules is performed based on corresponding functions, FIG. 12 is a diagram of an apparatus. The apparatus 1200 may be the first apparatus or the second apparatus in the foregoing method embodiments. The first apparatus is, for example, an independent device, a functional module, or a chip, and the second apparatus is, for example, an independent device, a functional module, or a chip. The apparatus 1200 includes a processing unit 1202 and a transceiver unit 1201.

It should be understood that the apparatus 1200 may be configured to implement the steps performed by the first apparatus and/or the second apparatus in the communication methods in embodiments of this application. For related features, refer to the embodiment shown in any one of FIG. 8 to FIG. 10. Details are not described herein again.

Optionally, functions/implementation processes of the transceiver unit 1201 and/or the processing unit 1202 in FIG. 12 may be implemented by the processor 1101 in FIG. 11 by invoking the computer-executable instructions stored in the memory 1103. Alternatively, functions/implementation processes of the processing unit 1202 in FIG. 12 may be implemented by the processor 1101 in FIG. 11 by invoking the computer-executable instructions stored in the memory 1103, and functions/implementation processes of the transceiver unit 1201 in FIG. 12 may be implemented through the communication interface 1104 in FIG. 11.

Optionally, when the apparatus 1200 is a chip or a circuit, functions/implementation processes of the transceiver unit 1201 may alternatively be implemented by a pin, a circuit, or the like. Optionally, the transceiver unit 1201 may include a sending unit and/or a receiving unit. The sending unit is configured to implement a sending function, and the receiving unit is configured to implement a receiving function. Alternatively, the transceiver unit 1201 may be an integral module that can implement the sending function and/or the receiving function. Optionally, the transceiver unit 1201 may be implemented by a transceiver.

This application further provides a computer-readable storage medium. The computer-readable storage medium stores a computer program or instructions. When the computer program or the instructions are run, the method performed by the first apparatus and/or the method performed by the second apparatus in the foregoing method embodiments is implemented. In this way, the functions in the foregoing embodiments may be implemented in a form of a software functional unit and sold or used as an independent product. Based on such an understanding, the technical solutions of this application essentially, or the part contributing to conventional technologies, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The storage medium includes any medium that can store program code, such as a USB flash drive, a removable hard disk, a ROM, a RAM, a magnetic disk, or an optical disc.

This application further provides a computer program product. The computer program product includes computer program code. When the computer program code is run on a computer, the computer is enabled to perform the method performed by the first apparatus and/or the second apparatus in any one of the foregoing method embodiments.

An embodiment of this application further provides a processing apparatus, including a processor and an interface. The processor is configured to perform the method performed by the first apparatus and/or the second apparatus in any one of the foregoing method embodiments.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive, (solid-state drive, SSD)), or the like.

Various illustrative logic units and circuits described in embodiments of this application may implement or operate the described functions by using a general-purpose processor, a digital signal processor (digital signal processor, DSP), an ASIC, a field-programmable gate array (field-programmable gate array, FPGA) or another programmable logic apparatus, a discrete gate or transistor logic, a discrete hardware part, or a design of any combination of the foregoing devices. The general-purpose processor may be a microprocessor. Optionally, the general-purpose processor may also be any conventional processor, controller, microcontroller, or state machine. The processor may alternatively be implemented by a combination of computing apparatuses, such as a digital signal processor and a microprocessor, multiple microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or any other form of storage medium in the art. For example, the storage medium may connect to a processor, so that the processor can read information from the storage medium and write information into the storage medium. Optionally, the storage medium may be integrated into a processor. The processor and the storage medium may be disposed in an ASIC, and the ASIC may be disposed in a terminal device. Optionally, the processor and the storage medium may be disposed in different parts of a terminal device.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Mutual reference may be made to content in embodiments of this application. Unless otherwise specified or a logical conflict occurs, terms and/or descriptions in different embodiments are consistent and may be referenced to each other. Technical features in different embodiments may be combined to form a new embodiment based on an internal logical relationship of the technical features.

It may be understood that, in embodiments of this application, the first apparatus and/or the second apparatus may perform a part or all of steps in embodiments of this application. These steps or operations are merely examples. In embodiments of this application, other operations or variations of various operations may be further performed. In addition, the steps may be performed in a sequence different from a sequence presented in embodiments of this application, and not all operations in embodiments of this application need to be performed.

## Claims

1. A communication method, wherein the method comprises:
obtaining first indication information, wherein the first indication information indicates one or more of the following: a first duration, wherein the first duration indicates a latest time for sending random information on an access occasion; a first step size, wherein the first step size is a time interval between two access moments in the first duration; or a first quantity, wherein the first quantity indicates a quantity of access moments in the first duration; and
sending first random information at a first access moment, wherein the first access moment is a moment after a first moment, the first moment is a moment related to a value of a first counter becoming 0, the first access moment is determined based on the first indication information, and the first counter is configured to determine a sending time of the first random information.

2. The method according to claim 1, wherein that the first access moment is determined based on the first indication information comprises:
the first indication information is used to determine one or more moments, and the first access moment is one of the one or more moments; or
the first indication information is used to determine one or more durations, the one or more durations comprise a second duration, and the first access moment is a moment at which the second duration expires after the first moment.

3. The method according to claim 1, wherein that the first access moment is determined based on the first indication information comprises:
the first indication information is used to determine one or more values, the one or more values comprise a first value, and the first access moment is determined based on the first value.

4. The method according to claim 3, wherein
the first value is a value to which the first counter is updated when the value of the first counter is 0, and the first access moment is equal to or later than a moment at which a value of the updated first counter becomes 0; or
the first value is a value of a second counter, and the first access moment is equal to or later than a moment at which the value of the second counter becomes 0.

5. The method according to claim 4, wherein
if the first value is 0, the first access moment is equal to or later than the moment at which the value of the first counter or the second counter becomes the first value.

6. The method according to claim 4, wherein the method further comprises:
if the first value is not 0, receiving a first message;
decrementing the value of the first counter or the second counter by 1 based on the first message; and
until the value of the first counter or the second counter becomes 0, determining that the first access moment is equal to or later than the moment at which the value of the first counter or the second counter becomes 0.

7. The method according to any one of claims 1 to 6, wherein the method further comprises:
receiving first information, wherein the first information is used to determine an initial value of the first counter, and the initial value is greater than or equal to 0.

8. The method according to claim 7, wherein the method further comprises:
if the initial value is greater than 0, receiving a second message; and
decrementing the value of the first counter based on the second message, until the value of the first counter becomes 0.

9. The method according to any one of claims 1 to 8, wherein
the first moment is the moment at which the value of the first counter becomes 0; or
the first moment is a moment at which a third message is received, and the third message is used to determine that the value of the first counter is 0.

10. The method according to claim 9, wherein
the third message indicates a first apparatus to perform access, indicates information used to determine the initial value of the first counter, is used by at least one apparatus to obtain synchronization, is used to resolve contention on access of at least one apparatus, or is used to start a next round of access process; or
the third message is used to decrement the value of the first counter by 1, indicates a next apparatus to perform access, indicates a next access occasion, is used by at least one apparatus to obtain synchronization, or is used to resolve contention on access of at least one apparatus.

11. The method according to any one of claims 1 to 10, wherein the first indication information is comprised in a fourth message, wherein
the fourth message indicates a first-type apparatus to perform access, or indicates a first-type apparatus to perform a first service, wherein the first apparatus is the first-type apparatus;
the fourth message indicates a first apparatus to perform access, indicates information used to determine the initial value of the first counter, is used by at least one apparatus to obtain synchronization, is used to resolve contention on access of at least one apparatus, or is used to start a next round of access process; or
the fourth message is used to decrement the value of the first counter by 1, indicates a next apparatus to perform access, indicates a next access occasion, is used by at least one apparatus to obtain synchronization, or is used to resolve contention on access of at least one apparatus.

12. The method according to any one of claims 1 to 11, wherein the method further comprises:
receiving a fifth message; and
if the fifth message comprises the first random information, determining that access is successful; otherwise, determining that access has failed.

13. The method according to any one of claims 1 to 12, wherein the method is applied to an AIoT apparatus.

14. A communication method, wherein the method comprises:
sending first indication information, wherein the first indication information indicates one or more of the following: a first duration, wherein the first duration indicates a latest time for sending random information on an access occasion; a first step size, wherein the first step size is a time interval between two access moments in the first duration; or a first quantity, wherein the first quantity indicates a quantity of access moments in the first duration; and
detecting random information at a first access moment, wherein the first access moment is determined based on the first indication information, and the first indication information is used to determine a sending time of the random information.

15. The method according to claim 14, wherein that the first access moment is determined based on the first indication information comprises:
the first indication information is used to determine one or more moments, and the first access moment is one of the one or more moments; or
the first indication information is used to determine one or more durations, the one or more durations comprise a second duration, the first access moment is a moment at which the second duration expires after the first moment, the first moment is a sending moment of a sixth message, and the sixth message indicates a first-type apparatus to perform access, indicates a first-type apparatus to perform a first service, indicates at least one apparatus to perform access, or is used to decrement a value of a first counter by 1, wherein the first counter is used to determine the sending time of the random information.

16. The method according to claim 14, wherein the method further comprises:
sending a first message, wherein the first message is used to decrement a value of a first counter or a second counter, and before the decrement, the value of the first counter or the second counter is a first value determined based on the first indication information.

17. The method according to claim 16, wherein
the first indication information is used to determine one or more values, the one or more values comprise the first value, and the first access moment is determined based on the first value.

18. The method according to any one of claims 14 to 17, wherein the method further comprises:
sending first information, wherein the first information is used to determine an initial value of the first counter, and the initial value is greater than or equal to 0.

19. The method according to claim 18, wherein the method further comprises:
sending a second message, wherein the second message is used to decrement the value of the first counter by 1.

20. The method according to claim 18 or 19, wherein the first indication information is determined based on a quantity of to-be-accessed apparatuses and/or the first information.

21. The method according to any one of claims 14 to 20, wherein the first indication information is comprised in a fourth message, wherein
the fourth message indicates a first-type apparatus to perform access, or indicates a first-type apparatus to perform a first service;
the fourth message indicates at least one apparatus to perform access, indicates information used to determine the initial value of the first counter, is used by at least one apparatus to obtain synchronization, is used to resolve contention on access of at least one apparatus, or is used to start a next round of access process; or
the fourth message is used to decrement the value of the first counter by 1, indicates a next apparatus to perform access, indicates a next access occasion, is used by at least one apparatus to obtain synchronization, or is used to resolve contention on access of at least one apparatus.

22. The method according to any one of claims 14 to 21, wherein the method further comprises:
sending a fifth message, wherein the fifth message comprises the random information.

23. A communication apparatus, wherein the communication apparatus comprises a processing unit and a transceiver unit, and the processing unit is coupled to the transceiver unit, to perform the method according to any one of claims 1 to 13, or the method according to any one of claims 14 to 22.

24. A communication apparatus, wherein the communication apparatus comprises a processor, and the processor is configured to cause the communication apparatus to perform the method according to any one of claims 1 to 13, or the method according to any one of claims 14 to 22.

25. A computer-readable storage medium, wherein the computer-readable storage medium is configured to store a computer program; and when the computer program runs on a computer, the computer is caused to perform the method according to any one of claims 1 to 13, or the method according to any one of claims 14 to 22.

26. A computer program product, wherein the computer program product comprises a computer program; and when the computer program runs on a computer, the computer is caused to perform the method according to any one of claims 1 to 13, or the method according to any one of claims 14 to 22.

27. A chip, wherein the chip comprises:
a processor and an interface, wherein the processor is configured to invoke instructions from the interface and run the instructions; and when executing the instructions, the processor implements the method according to any one of claims 1 to 13 or the method according to any one of claims 14 to 22.
